# EUROPEAN PATENT SPECIFICATION

(11) **EP 3 631 092 B1**
(45) Date of publication and mention of the grant of the patent: **13.09.2023**
(21) Application number: 17807925.7
(22) Date of filing: 21.09.2017
(51) Int. Cl.: E01C 23/088, E01H 1/08, B24C 3/06

(54) **COMBINED HIGH-PRODUCTIVITY SHOOT-PEENING MACHINE PROVIDED WITH SCARIFYING AND MAGNETIC GROUP ACCESSORY**
KOMBINIERTE KUGELSTRAHLMASCHINE MIT HOHER PRODUKTIVITÄT MIT VERTIKUTIER- UND MAGNETGRUPPENZUBEHÖR
MACHINE DE GRENAILLAGE À HAUTE PRODUCTIVITÉ COMBINÉE POURVUE D'UN ACCESSOIRE DE SCARIFICATION ET DE GROUPE MAGNÉTIQUE

(30) Priority: 01.06.2017 CH 7162017
(43) Date of publication of application: 08.04.2020
(73) Proprietor: Trisha Anstalt, Vaduz, FL, 6900 Lugano-Massagno (CH)
(72) Inventor: LO VAGLIO, Giuseppe, 6743 Pollegio (CH)
(74) Representative: Riccardi, Sergio
(86) International application number: PCT/IB2017/001199
(87) International publication number: WO 2018/220421

(56) References cited:
- EP-A1- 2 325 395
- CN-A- 104 826 734
- CN-U- 202 073 017
- CN-Y- 201 202 070
- US-A- 3 934 373
- US-A- 5 622 265
- US-A1- 2013 157 545
- US-A1- 2016 198 924

## Description

This invention refers to a new shoot-peening machine with scarifying accessory.

The Applicant works with more than 20-year proved experience in the field of the manufacturing of machines for the treatment of the coatings of road, airfield, and industrial surfaces.

The Applicant is owner of previous patents that represent the up-to-date State of the Technique, relevant to the solution of various problems in the field of the cleaning and regeneration of the coating of roads and airfields.

A first problem comes from a correct

### Recycling of the microspheres

To solve the problem of the overheating with sticking of the bituminous materials and their removal avoiding their deformation and ovalization.

In fact, the high acceleration experienced by the microspheres inside the turbine besides their impact causes the production of a big amount of heat which primes a chemical reaction of the struck bituminous parts, reviving, tempering and so making them sticky.

Big difficulties come from the treatment of the used abrasive, to free it from stones and bituminized sands that stick to it, in particular these latter have created not few problems despite the contrivances of the previous inventions of the applicant.

Therefore, it was embodied in the body of the shot-peening machine subject of this invention a second intercooler sieve so that the debris adherent to the abrasive when cooled by the experienced mechanical shaking break off allowing in turn to obtain a complete cleanliness of the abrasive which can be convoyed perfectly clean for a subsequent total cooling of the spheres in a tower elevator to avoid their ovalization during their recycling and re-use.

A second problem comes from the structure and composition of the modern road markings, that containing new materials and substances different from the sole traditional paints cause various problems for their removal, the sole shot-peening to be done in deep for their elimination causing the destruction of the roughness of the road coating besides the problem of the contamination of the abrasive spheres.

The road markings.

To make the road markings visible and perceivable to the man and to the car special pigments and machines are used.

After laying they appear like small transverse grains and/or bars.

These typologies of road markings cannot be removed with the shot-peening machine, because to be able to remove the part with most of the paint in relief it would result in a damage of the part with less quantity.

Currently there are clearly other technologies that are used; high pressure water or scarifying milling machines.

We believe that the result is mitigated by the fact that no alternatives are available.

Causes determining the removal of the road markings:
- Variation of the wording of the yard, motorway, city or canalization road markings
- Laying of micro-carpet on the existing road markings
- Remaking consequent to the re-emerging of the bitumen
- Variation of rules relevant to the road markings.

### The solutions (State-of-the-Art)

### Shot-peening machine

The shot-peening is a process using steel spheres of diameter ranging from 0,8 to 1,4 mm, to hit the surface of the coating.

The microspheres are thrown against the surface and the impact of these microspheres removes the superficial soft parts of the bituminous conglomerate and of the coloured pigment bringing in relief the aggregate and creating a micro and macro superficial roughness able to receive the new road markings.

In case of special road markings, the microspheres are thrown against the surface by one or more turbines, but because the thickness is very irregular the shot-peening cannot be used for the removal because in the empty space it would result in a damage of the road coating.

It is then allowed at most and to a limited way the removal by shot-peening of traditional road markings.

### Scarifying machine

Currently there are on the market various models of scarifying machines driven by air or internal combustion engine, with inverted rotation against the line of march, with horizontal rotation and with double rotation, that can be embodied in operating machines or used manually according to the dimensions. They derive from the principle of the milling machine, using only smaller "teeth" or anyway less aggressive. The scarifying machine is intended to scarify (roughen)the road surface. Despite the efforts of the specialists its use is limited, in the Nineties a model of 2000 mm subdivided in sectors of 400 mm, seemed to have solved the problem of the superficial flatness. The problem is unresolved and a few years later it was banned because of the danger represented by the small grooves left by the teeth. Later, with the change of the rules regarding the colouring of the road markings the use of the scarifying machines seemed to be useful, but the poor productivity, the high wear and the excessive aggression of the road coat have decreed their end.

### The Limits:

1. Currently the machines can be managed only by very skilled operators.
2. The machines that can operate on asphalt, concrete and ferrous surfaces, show limits by the removal of road markings, mainly those of "sonorous" type; the longitudinal and transversal unevenness does not allow the removal of this typology of road markings, it should be designed a scarifying system which zeroes the thickness bringing it to be uniform.
3. The direction represents another limit of the machine, currently managed by the operator in the cabin, apparently it could seem easy but in reality, very complex mainly in airfields where there are not lines or anything else to follow to determine the direction and where the pass lasts more than one hour.

### Developments and solutions:

- Implementation of the machine by means of the addition in combination with a forward scarifying machine of new design.
- Complete automation of the functions, work acquisition and evaluation.
- Implementation PLC, Tablet, Smartphone, Router Wi-Fi
- System of directional drive
- Safety measures for the personnel at work
- Possibility of remote operation without operators

It was then embodied upstream the vehicle a scarifying machine of new concept and design for the removal of the road markings of new type, able to remove the road markings without damaging the road coating which is regenerated by the shot-peening machine downstream, the whole by a single pass.

This invention refers then to an improved shot-peening machine combined with a scarifying machine, mounted on a chassis of a self-propelled road yard vehicle, to remove road markings, remove gum from airfield surfaces and roughen the coating of runways, roads and motorways.

Hence a big advantage against the previous machine carried out according to Patent EP2325395 of the Applicant.

This invention refers to a new design of shot-peening machine with scarifying accessory.

The idea consists of applying on the front part of the vehicle a sideways sliding plate, to which a milling drum is connected; according to the typologies of road markings being possible to apply different typologies of tools.

Two ducts connect the scarifying machine to the self-propelled vehicle, one acts as fan to remove the residual material which goes in the separation and washing box, the second contains the hydraulic ducts for the transmission of the movement and the electric and electronic cables for the management sand control of the utilities.

This scarifying accessory has the sole function to remove the protruding parts from the surface of the road coating, it must absolutely not damage this latter to avoid creating the micro-grooves that the scarifying machines of the known technique fail to avoid and solve, the regeneration of the road coating being entrusted to the rear shot-peening machine which immediately follows.

In fact the idea consists of the application on the front part of a vehicle of a first connection and support plate, of a second plate sliding sideways on this first plate through a guide or track arranged on this, connecting to this second plate through two lock and pivot supporting pins an accessory scarifying machine built by a sequence of rollers rotating in opposite direction but moving forward in the direction of the movement of the vehicle, with the possibility of free transversal and vertical movement as well as inclination of their axes to adapt themselves to the work plane where lay the road markings to be removed without damaging the road coating whose regeneration is entrusted to one or more coupled shot-peening machines, placed in the rear part and connected to the vehicle. According to the typologies of road markings it is possible to use different types of tools applied on the rollers of the scarifying machine, which at the end of the work can be overturned on said second plate on which it is hinged by rotation of 90 degrees of pivoting.

Two flexible ducts or tubes connect the scarifying machine to the body of the vehicle, one tube acts as fan, to remove the residual material which goes in the filtering and collecting box of the dusts and debris, placed inside the body of the vehicle; the other one contains the hydraulic pipes, the electronic cables, the electronic connections for the transmission respectively of the motion, of the command, control, setting and adjustment of the various members and components of the scarifying machine, at the command and control post of the operator.

### Principle of operation

The principle of operation of the scarifying machine of the known technique recalls overall that of the milling machine, that is a rotating drum on which "teeth" are applied tools of special material able to remove the superficial part. By the milling machine the "teeth" are welded around a sheet cylinder hence the rigidity of the two work axes determines a sole work plane which does not allow the adaptation to the roadway using the machine on disconnected surfaces. On the contrary by the scarifying machine of the invention in a form of execution, the drum shows a central shaft and two disks at the ends, a sequence of spindles on the circumference, on these latter are inserted octagonal washers of thickness variable from 5 to 10 mm. The central hole of the washers is about the double of the diameter of the spindle allowing to operate also on disconnected surfaces. Preferably six milling drums compose the scarifying machine which is integrant part of this invention.

The flatness of work of each one is managed by the PLC, which according to the settings of the operator will remove a part of the road markings avoiding the contact with the road surface. To this aim the axle-base among the rollers put in sequence are vertically swinging, transversally displaceable and revolving, provided with sensors and managed by PLC.

Clearly all the drums, in the various forms of execution of the machine subject of this invention, will have a different arrangement of the tools to manage for the best and with a greater speed and productivity the removal of the different typologies of road markings, as well as the type of tools which will be embodied according to the requirements of the road markings to be removed.

We can illustrate as example three different typologies of tools arranged on the milling drums:
- Milling drum with box tools;
- Milling drum with hoe tools;
- Milling drum with diamond tools.

In the presence of a disconnected road coating, each axis of the drums can adapt its roller or disks for the best.

But it allows us above all to remove the typology of road markings called "noisy plate", or that called "drop" which includes glass microspheres.

Without PLC control, it would not be possible to remove these typologies of road markings without damaging the road coating. In fact, because of its own weight each drum would try to break into the surface in absence of paint to be removed; the shot-peening performed downstream in the same pass will allow to leave the surface clean, without disturbance for the utilities and free to receive a possible further paint.

A third problem comes from:

### The personnel and the technology

The technology process evolves continuously, the systems of data acquisition and transmission reached a very high level. Currently only to switch on the machine and start all the members, turbines, sieves, fans and so on, a skilled operator is needed, as well as to set the roughening intensity and the direction to follow. Without the introduction of a PLC or similar with system software for the management of the functions, an application for data acquisition and processing and a modem for the remote assistance it is not possible to manage the machine; the survey of the functions, besides to "help" the operator to decide the roughening intensity, because the currently available technology, allows to acquire and process the data in real-time, transfer know-how directly to the PLC; it avoids potential and huge damages to the surfaces and to possible obstructions (for example runway lights and so on), further on it provides useful data to prepare graphs and reports about the difference before and after the operation. Nowadays, the introduction of Smartphone, Personal Computer and Internet, the domotic and so on made us a bit dependent from an outside help. Nowadays our cars have system to survey the adherence, the obstacles and the road markings. That "forced" the specialists to produce and implement special road markings. The problem appears when the road markings must be removed. The Applicant, thanks to the acquired experience, carried out an innovative solution: add an accessory having the function of honing machine, to remove the superficial parts of the road markings without damaging the coating for the subsequent pass with the shot-peening machine.

Nowadays the predetermining aspects to face speaking about maintenance of roads, motorways and runways refer to the degeneration of the superficial properties, the traffic hampering, the safety of the employed personnel and the environment.

The bodies and the relevant suppliers engage themselves in the research to use ecological, safe and possibly recyclable raw materials, that the producers of applied technologies and machinery are forced to pursue. Nowadays any technology cannot be considered exempt from being deposed or absolutely fully replaced.

As already said we are nowadays accustomed to being helped by the technology, at home, in the car and at work.

The demonstration to an operator of a high technology machine with a full human management presents an obstacle. Operators accepting such task cannot almost be found, that in addition to the technical requirements of the machine has addressed us toward the application of various technologies.

In fact, without the control of the PLC it would not be possible to remove these typologies of road markings without break into the road coating, because of its own weight each drum would try to break into the surface in absence of paint to be removed. The shot-peening performed in the same pass, will allow to leave the surface clean, without disturbance for the utilities and free to receive a possible further paint.

This is on the contrary made possible by the intervention of the PLC on the axle-base among the rollers arranged in sequence transversally, vertically swinging, displaceable and revolving.

### Objectives of the new project

Automation and implementation of the scarifying accessory to remove the superficial road markings.

The project set itself the following objectives:
1. 3D display and measurement system allowing to:
   a. Survey the current state of the roughness, the thickness of the road markings to remove;
   b. Provide assistance to the operator during the work with the detection of the objects to avoid and calculation of the optimal work path;
   c. Optimize the work cycle comparing the initial values with those noted after the treatment;
   d. Record a report of the working complete with images.
2. Development of a scarifying machine with 6 independent axes that:
   a. Allows to remove the protruding part of the road markings in a simple way;
   b. Has an assisted control for each axis in order not to break into the road surface;
   c. Suck up the whole removed part and does not overheat the surface.
3. Process automation:
   a. Implementation of the computerized management of the machine to control all the electrical and pneumatic components;
   b. Allow the remote diagnostic and as much as possible a simple and ergonomic user interface;
   c. Reduce to a single operator the control of the whole process.

### 3D display and measurement system

The display system collects data till now inaccessible, allowing a new approach to the working process:
- 3D measurement of the superficial micro and macro roughness: thanks to the front 3D display and measurement system it is possible to survey the grade of roughness and give precise indications on the state of the surface to treat, then allowing to set automatically various process parameters; the result of the shot-peening is continuously measured by a similar rear 3D display system, this allowing to calculate and continuously adapt the working speed of the machine to obtain an optimal work; currently this kind of control is performed manually by a dedicated operator who follows the vehicle walking on the road in a situation of great danger, in the future this operator will seat in the cabin to monitor the whole process;
- Measurement of the thickness of the road markings to remove (for example white line): this datum - besides the position of the line - is captured by the front 3D display/measurement system and then transmitted to the control system of the scarifying machine which set the depth and the position of each single axis;
- Driving assistance: the front display system detects the white line or recognize the previous pass allowing the driving assistance system to calculate the way and physically drive the vehicle so that the milling machine or the shot-peening machine find itself exactly in the work position, the presence of the operator driving the vehicle is anyway necessary, unless in future the remote driving is implemented with the technology of driverless vehicle, even if he will be responsible of the full control of the process; the current solution foresees a driver exclusively dedicated to this work;
- Object detection: the front display system allows to avoid objects that are not to treat, like for instance the runway lights or to stop in case of presence of unavoidable obstacles;
- Recording of the state of the road coating before and after the treatment, with mapping of the defects with their GPS coordinates.

The data detected by the display system are obtained by means of the following modules:
- The laser triangulation gives the depth data, for example the thickness of the white line and the macro-roughness of the asphalt;
- The scattering allows to detect the micro-roughness of the asphalt;
- The processing of the images of the asphalt allows to detect homogeneity faults of the treatment.

A 3D display and measurement system was never applied to this type of machinery. The sight allows the assistance to the driving of the lorry; let the scarifying machine work correctly; set, control and record the entire work process. The evaluation of the quality of the milling and shot-peening process was never developed in the world and is indispensable to obtain the constancy of the settled results. The data obtained by the display system, like the 3D profile, the scattering measurement and the result of the processed images must be combined and interpreted to quantify the quality of the process.

The extreme work conditions to which the display system is subjected (bouncing microspheres, reflections, high temperatures) are the new problems that have been faced.

Illumination and laser have been developed for this specific application, where the components are outside and exposed to the direct sunlight.

The trouble of the vibrations, important factor in this kind of application, has been also specifically faced.

The PLC, or equivalent, collects all the signals received from bulbs, transducers and sensors installed on board, manages automatically activating and deactivating service commands like: radiator start, filter washing, and so on setting the oil flow, the revolution number and so on; manages the commands sent to the operator in the cabin or from the one on the ground, by means of the radio control and autonomously, in fractions of second, compares the requested commands with the programmed ones and executes them; in case of incorrect move, besides to prevent to put it into effect, provides to send an acoustic signal followed by a text message to the operator in the cabin; can set the working speed according to the result obtained by the treatment, move laterally and lift or lower ac the work bench cording to the need, open or close the abrasive.

The diagnostic can be inquired locally as well as remotely (for instance via GLTE, Intranet or Wi-Fi), allowing remote sensing and actions that allow to directly modify the state of the machine as well as update the software, as well as optimize the process in progress; the process can be remotely assisted if the operator likes to confer with the control centre. All the commands manageable by the operators, by the PC and by the maintenance people are memorized on a memory card. The involved staff by means of different password according to their duties can access the software, visualize historical data, modify some parameters and reset alarms. The software can be modified only by the authorized personnel, hence any try of modification, copy or tampering is not authorized by the system, even the removal of the memory for the installation on another PC cause its lockout. Moreover, the Management has full authority to manage and elaborate at will the data received from the PCs installed on the machines, to create updates or others. The owner Company is the sole authorized to remotely access the PC, to perform the remote diagnostic. The product of the current line includes various innovations, of course already implemented: the idea to integrate the solution in a lorry able to move autonomously, the hydrostatic traction, the intercooling system and the efficient filtering system of the aggregates. Based on these concepts, already creating themselves a noticeable gap against the competitors, the following innovations are properly added to the product, allowing further reducing the working time and the personnel involved, increasing at the same time the quality and the productivity of the working.

### The 6-axis scarifying machine

To fit the road profile and to guarantee the removal of the sole protruding part of the road markings it has been necessary to develop a new scarifying machine with 6 independent and self-cleaning axes.

The integrated milling system allows to subject the surface to two treatments - milling and shot-peening - by a single pass, noticeably reducing the working time, extremely critical factor in this kind of applications, moreover also reducing the possibility of error in the application of the treatment.

### Process automation

The shot-peening and milling process was never automated before in the terns proposed by this project, whose aim is to allow the use of the machine any operator with little training and lacking knowledge of the matter, being the setting of the process and the interactions among subsystem carefully designed.

The remote diagnostic is an important feature which allows the skilled operator to intervene from a control centre and to understand quickly the problem, giving all the relevant data in real time and undertake remedial actions. It is a basic brick to guarantee a high reliability typical of this kind of machines.

More precisely this invention refers to a shot-peening machine combined with a high performance self-propelled scarifying machine, to treat the coting surfaces of bituminous conglomerate, asphalt, concrete or metal, including:
a shot-peening unit (A-A), a suction, filtering, separation and storage unit (B-B), and a scarifying unit (C-C) couples together,
   - the shot-peening unit (A-A) including feeding means of the external fresh air, means throwing the microspheres, a sequence of ducts for the transit of said microspheres together with the collected impurities and the residual materials of the working process and separation, collection and recycling means;
   - the suction and filtering unit (B-B) including an aspirator or fan, a separating and collecting box of the materials, dusts, fillers and more of the working cycle, an autonomous auxiliary power generator distributing autonomously the motion to the machine through a hydrostatic transmission and generating the hydraulic and electrical power needed by all the units and utilities enslaved to the machine,
characterized by the fact that:
   - the unit (A-A) is provided with a further intercooler sieve for the cooling of the microspheres and their final decontamination from the bituminous residual products adherent to them;
including
   - a roller scarifying unit (C-C) arranged on the front part of the self-propelled vehicle, to preliminarily remove the road markings before the subsequent shot-peening process.
   - a self-propelled mechanic-magnetic unit (D-D) for collecting metallic materials, mainly on road coatings and runways, composed of an autonomous self-propelled vehicle or trailer, provided with:
      - brushes on the front part to free and remove the grit attached and entangled in the modified bitumens that are tempered during the shot-peening treatment;
      - dry suction and filtering means avoiding producing powders during the brushing;
      - fully automated rear magnetic group continuously capturing ferrous materials, with adjustable rotation and ground clearance automatically controlled according to the settings to control the removal of said materials;
      - collector of the recovered lost grit;
      - suction and conveyance ducts of scrap materials, debris and contaminating residual products of the grit to the discharge containers;
      - washing and storage means.

The combined shot-peening machine is also characterized by the fact that the scarifying unit (C-C) is fully arranged on the vehicle on its front part and to whom is connected by means of two plates coupled together, a first frontal plate placed on the front chassis of said self-propelled vehicle, a second plate able to translate along the full length of said first plate to whom a pivoting and vertically adjustable plate is anchored which is integral to the rear end of said scarifying unit, allowing the scarifying unit to translate along the full length of the self-propelled vehicle, to set itself in height against it and to rise and turn over it by a rotation of 90°, for an easy transportation from the yard to the garaging place or workshop.

The combined shot-peening machine is characterized by the fact that the scarifying unit (C-C) includes at least six drums with self-cleaning milling rollers, mounted on independent axes, arranged in sequence, rotating in opposite direction against the direction of the movement, adaptable to the working plane, moveable transversally, in height and slope, provided with tools of different typologies according to the needs of the road markings to be removed, allowing the shot-peening performed in the same pass, to leave the surface clean not disturbing the utilities and free to receive a possible further paint.

The combined shot-peening machine is characterized by the fact that the milling rollers of the drums of the scarifying unit (C-C) have a different arrangement of the tools, so that the removal of the road markings can be managed for the best and quicker avoiding the contact with the road coating, in presence of a disconnected road coating, being each axis able to adapt its drum for the best.

The combined shot-peening machine is characterized by the fact that the tools mounted on the milling drums or rollers are box or hoe or diamond tools.

The combined shot-peening machine is characterized by the fact that the rotation axes of the drums of the rotating milling rollers of the scarifying unit (C-C) are provided with sensors to survey their position and the working data for their feedback of setting and control.

The combined shot-peening machine is characterized by the fact that the scarifying unit (C-C) includes a bodywork with frame and bonnet which houses the rollers of the milling drums, partition bulkheads to separate and discharge the debris among the different rollers, intake and removal ducts of said residual materials at the box of the unit (B-B), a control station of the movements of rollers and plates, ducts for cables, cameras for the 3D display and measurement means, bulbs, transducers and sensors installed on board to collect and transmit all the captured signals and the PLC collected parameters.

The combined shot-peening machine is also characterized by the fact that in the scarifying machine the axle-bases among the drums arranged in sequence, vertically swinging, laterally displaceable and revolving, do not include a unique roller along their length but one or more disks mounted side by side on different lengths of the axis, coupling and inserting themselves parallel to the other disks mounted on the different rotation axes.

The above mentioned combined shot-peening machine is moreover characterized by the fact that, in the scarifying machine the drum shows a central shaft and two disks at the ends, a sequence of spindles on the circumference, on these latter are inserted octagonal washers of thickness variable from 5 to 10 mm, the central hole of the washers being about the double of the diameter of the spindle allowing to operate also on disconnected surfaces.

The combined shot-peening machine includes in addition an integrated system software of survey, monitoring and control managed by a utility, like PLC, Tablet, Smartphone or Server-Router Wi-Fi, able to perform the following functions:
- collecting all the signals received from bulbs, transducer and sensors installed on board, automatically managing activating and deactivating all the service commands, forwarding the dictated commands to the cabin or ground operator, through the radio control and autonomously, comparing in real time the requested commands with the programmed ones and executing them, in case of incorrect move, besides to prevent to put it into effect, providing to send an acoustic signal followed by a text message to the operator in the cabin, setting the working speed according to the result obtained by the treatment, moving laterally and lifting or lowering the work benches according to the need;
- front and rear 3D display and measurement means coupled to said utility to allow the assistance to the driving of the lorry, let the scarifying machine and the shot-peening machine working correctly, set, control and record the entire work process.
- a diagnostic routine/application included in said utility, with both local and remote inquiry, allowing remote sensing and actions, allowing the utility to directly modify the state of the machine as well as update the software, as well as optimize the process in progress, said process being remotely assisted if the operator likes to confer with the control centre.

This invention also refers to an automated process using the machine subject of the invention, managed by the software applications, characterized by the fact that it includes,
d. the implementation of the computerized management of the machine to control all the mechanic, pneumatic, electric and electronic components;
e. the use of the remote diagnostic with a user interface extremely simplified and ergonomic;
f. the reduction to a single operator assigned to the control of the whole process, subjecting the surface to be treated to two treatments - integrated milling and shot-peening - by a single pass, adapting itself to the road profile and guaranteeing to remove only the protruding part of the road markings, subsequently regenerating said surface noticeably reducing the critical factor of the working time, eliminating the possibility of error in the application of the treatment.

Said automated process is suitable and compatible to a remote management and operation of the whole working process, in absence and without the need for a local operator in a full automatic and autonomous way.

The machine subject of this invention is suitable to be used to remove the road markings and to clean and regenerate the macro-micro roughness of the road and motorway coating, including the coatings of modified bitumen (polymeric bases).

As well as for cleaning and gum removing of the runways and the removal of the runway markings in the airports.

This invention refers also to a self-propelled unit with suction, storage and housing of the magnetic group recovering the possible part of abrasive wasted and not recovered by the shot-peening machine, which otherwise would be lost with safety implications.

We give now a description of some preferred forms of execution of the machine subject of this invention by way a non-limiting example of the invention itself, without depriving of anything the extension and the generality of the same, with reference to the drawings of the attached tables:

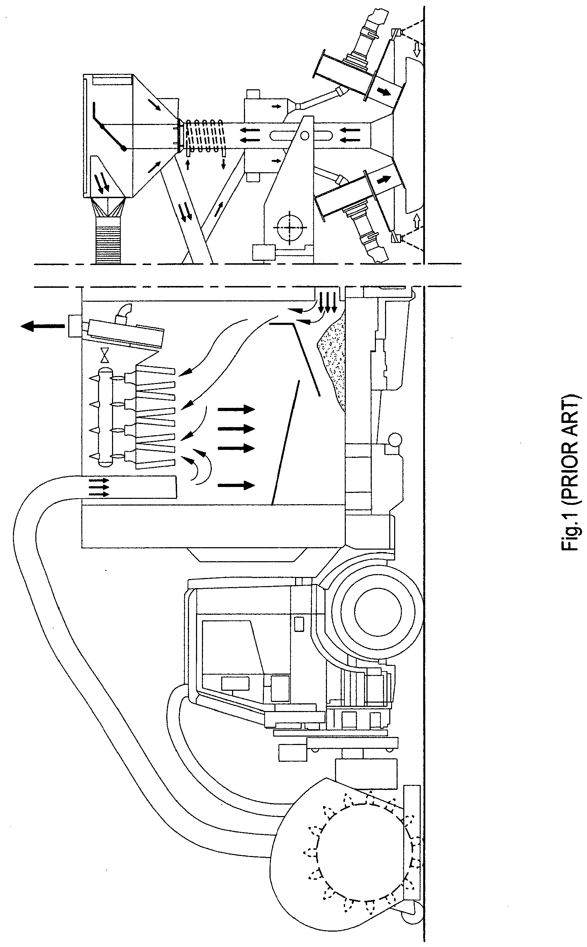

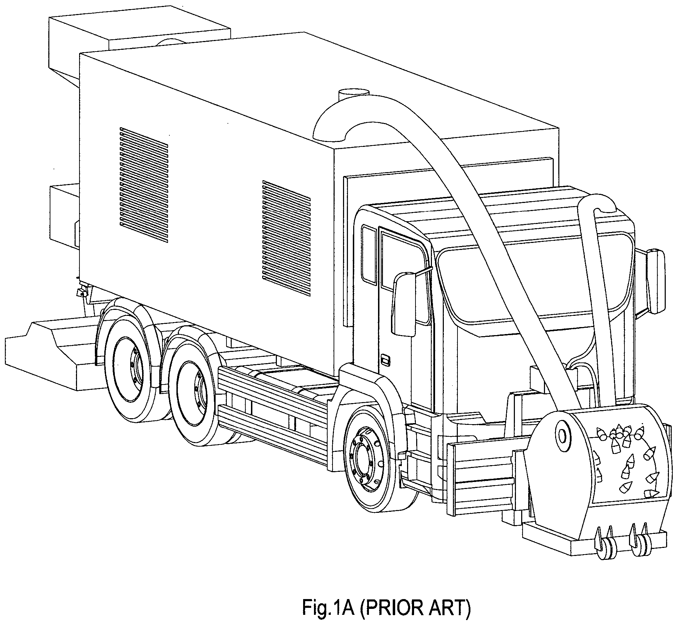

- Figures 1, 1A show the Prior Art or State of the Technique;
- Figure 2 shows a view of the self-propelled vehicle equipped with the shot-peening machine and the scarifying machine;
- Figure 2A shows in detail a view of the shot-peening machine equipped with the additional separation and cooling means;

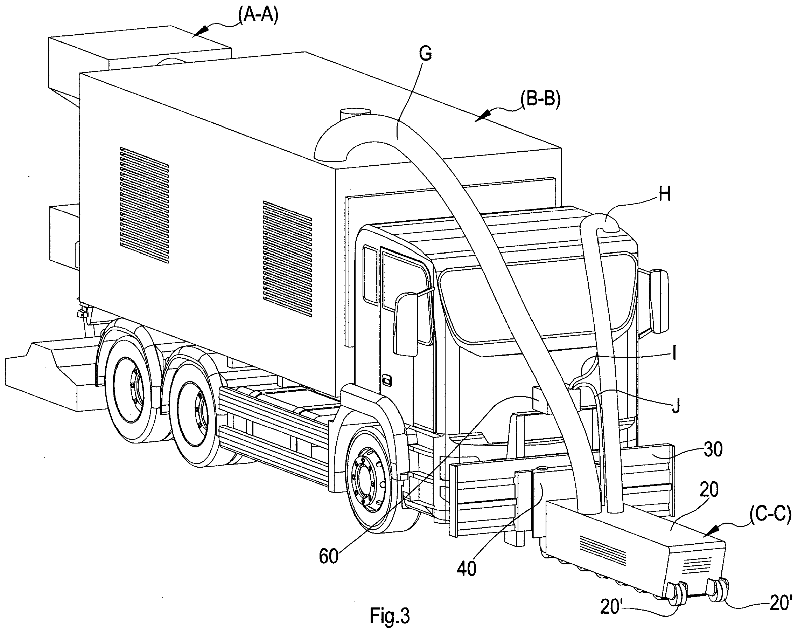

- Figure 3 shows a front perspective view of the self-propelled vehicle equipped with the shot-peening machine and the scarifying machine;

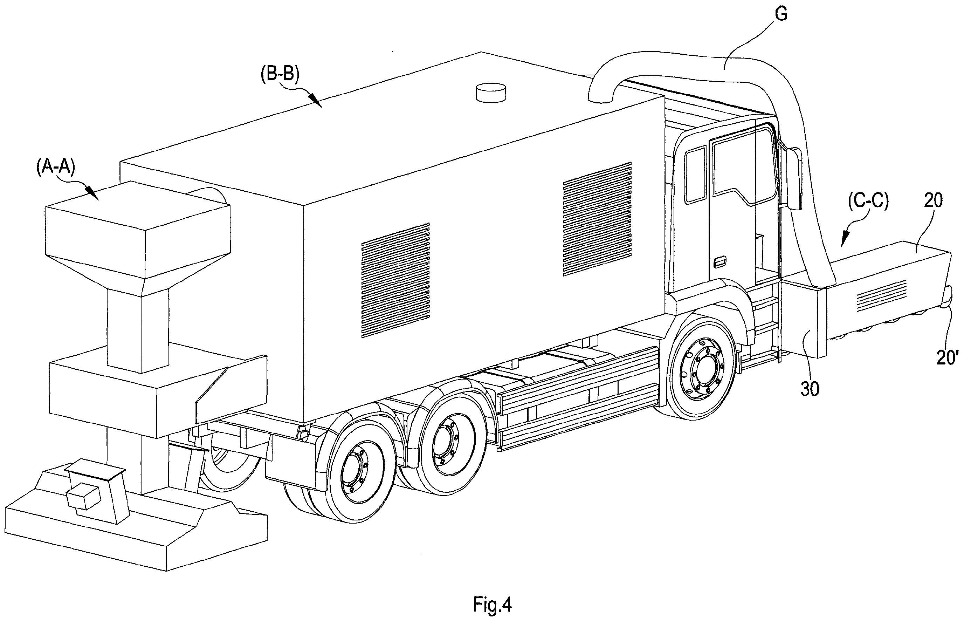

- Figure 4 shows a rear perspective view of the self-propelled vehicle equipped with the shot-peening machine and the scarifying machine;
- Figure 5 shows the arrangement of the rollers of the drums that build the 6-axis scarifying machine;
- Figure 6 shows an open sectional view of the 6-axis scarifying machine with the motion degrees of freedom of its roller drums;
- Figure 7 shows the scarifying machine with inside view of its components, together with the means of junction, fixing ad drive to the front support plate of the self-propelled vehicle;
- Figure 8 shows the hollow of the outlet duct of the residual material built by the bulkheads and the partitions of the rollers, together with the means of junction, fixing ad drive to the front support plate of the self-propelled vehicle;
- Figure 9 shows an example of execution of a scarifying machine with six roller drums in sequence;
- Figure 10 shows an example of execution of a scarifying machine with disk drums with alternate arrangement;
- Figure 11 shows a view of the scarifying machine pointing out its inside components, together with the junction, fixing and drive means to the front support plate of the self-propelled vehicle, showing its 90° rotation pivoting for its transversal overturn on the front plate of the self-propelled vehicle, during its transportation from/to the garaging to/from the yard or work place;
- Figures 12, 13, 14 show the different typologies of milling tools, respectively box, hoe, diamond teeth, fitted on the rollers mounted on the drums;
- Figure 15 shows in plain view the arrangement of the disks referred to in the view of the scarifying machine of the Figure 10, with disk drums alternatively arranged and evidence of the shafts and axes of rotation;
- Figure 16 shows a plain view of the scarifying machine od=f Figure 10 with disk drums alternatively arranged with evidence of the shafts and axes of rotation provided with sensors and the front and rear cameras;
- Figure 17 shows the survey ad control cabin;
- Figure 18 shows in a block diagram the sequence of data survey and acquisition and of data elaboration, recording and transmission, for the survey and control actions of the operator;
- Figure 19 shows the self-propelled vehicle, as housing, transportation and working mean of the magnetic group removing the grit from the coating surface, wasted during the shot-peening and not recovered before;
- Figure 20 shows a view of the magnetic group of removal and collection of the grit "lost" during the shot-peening process built by Neodymium bars arranged on a conveyor belt;
- Figure 21 shows a view of the magnetic group of removal and collection of the grit "lost" during the shot-peening process built instead by a fixed Neodymium bar placed between the ground and the conveyor belt;
- Figure 22 shows in another form of execution a view of the magnetic group of removal and collection of the grit "lost" during the shot-peening process with a belt sliding instead on a Neodymium plate and a Ferrite plate fixed and hinged together by means of a magnetic pulley;
- Figure 22A (with reference to the previous one) shows the details of the interface between conveyor belt and dragging and supporting shafts, with longitudinal guides and lateral bulkheads, to prevent the discharge of the metallic material during its handling;
- Figure 23 shows another form of execution including a two-way carriage, comprising two fixed magnetic drums of Ferrite-Neodymium each embodied into counter-rotating jackets or covering disks;
- Figure 23A shows an execution of the previous where on a section of the circumference the drums are replaced by a fixed crown of bars of Neodymium internal to the rotating jacket.

### Description of the combined scarifying and shot-peening machine

The machine of the invention comes typically to solve the problem of the removal of the new typologies of "drop" or "lamellar" road markings, with subsequent regeneration of the macro and micro roughness of the road coating.

The technology has been applied to a road lorry with three to five axes.

The aim is to have a vehicle free to circulate on the roads to reach the possible yards, airports and so on, provided with both shot-peening and scarifying machine. Moreover, the aim of the technology applied to this new machine unique in its kind is to be able to work in moving yards, that means be able to work on roads, motorways and airports, where it is necessary to remove the road markings and remake them immediately after without close the lane or the section. The speed during the work shall be 1 km/h to cope with the coating vehicles.

By the two updated technologies of scarifying and shot-peening applied to this machine we would like to cure the drawbacks of the one and the other and to capture a share of this market left at the moment latent, trying to avoid troubles due to the lack of road markings or emission of dusts, liquids and other.

The shot-peening machine combined with high performance self-propelled scarifying machine, for the cleaning and regeneration treatment of the coating surfaces of bituminous conglomerate, asphalt, concrete or metal,
includes:
- a shot-peening unit (A-A),
   provided with:
   1, 1' turbines
   1", 1‴ abrasive container, fed by clean and cooled microspheres
   2, 2' intake feeder of the external air
   3, 3' turbine work bench with intercooler for cooling the microspheres before the impact because of the heat accumulated during the acceleration
   4 cyclones
   5 multiple-stage sieve separating abrasive (microspheres)-filler
   5', 5" rotating drums and grilles separator sieve
   7 additional final separator sieve microspheres/residual filler with heat exchanger
   7" heat exchanger
   7' heat exchanger cooling fan
   12, 12', 12" suction column
   13 cooling tower / heat exchanger abrasive-filler
   15 cooling elevator
   A discharge duct abrasive (microspheres)-filler
   B discharge duct air-dust from cyclone
   C discharge duct air-filler from sieve
   C' discharge duct abrasive-residual filler from additional sieve-heat exchanger
   D' discharge duct abrasive cleaned and cooled by the additional sieve-heat exchanger to elevator
   D discharge duct cleaned and cooled microspheres to abrasive container
   E discharge duct air-residual filler from additional sieve/heat exchanger
   F final exhaust manifold air-filler of all the discharge ducts,
   (Figures 2, 2A),
   includes:
      - a self-propelled suction unit for the separation and collection of the materials, dusts, filler and other (B-B),
   provided with:
      8 box
      8' power unit/autonomous primary generator
      9 suction fan
      9' self-cleaning filters
      10 air compressor
      10' compressed air filter cleaning nozzles
      11 hydrostatic transmission group
      14, 14' fillers, dusts and residual materials suppression bulkheads,
      (Figures 2, 2A, 3, 4)
   includes:
      - a self-propelled scarifying unit placed in front of the vehicle (C-C),
   provided with:
      G, G' suction/discharge duct of residual material
      H cables duct
      I, J hydrostatic ducts
      20 rolling scarifying machine
      20' wheels of the self-propelled scarifying machine
      21, 22, 23, 24, 25, 26 rotating milling drums/rollers axes
      21', 22', 23', 24', 25', 26', 27 rollers bulkheads, discharge paths and slits of the milling and residual material convoyed to the suction,
      21", 22", 23", 24", 25", 26" sensors of the rotation shafts
      29, 28 front and rear 3D display cameras
      30 frontal plate of the self-propelled vehicle supporting the scarifying
      30', 30" frontal plate rail, guides
      40 scarifying machine translation plate
      40' bush housing stop pin
      50 scarifying machine rotation/overturn plate
      50' lock/unlock axis of pin rotation hinge
      50" rotation hinge of scarifying machine plate
      51 lock/opening-closing pin
      51' sliding seats for lock/unlock pin closing/opening
      52 hinge support and connecting and fixing pin of the scarifying machine plate to the translation plate
      60 hydrostatic control unit,
      (Figures 5, 6, 7, 8, 9, 10 ,11).
   includes:
      - a control and command cabin:
         70 console/control-command board of the shot-peening machine with scarifying machine and utilities,
         (Figure 17).

### Inside view of a model of scarifying machine.

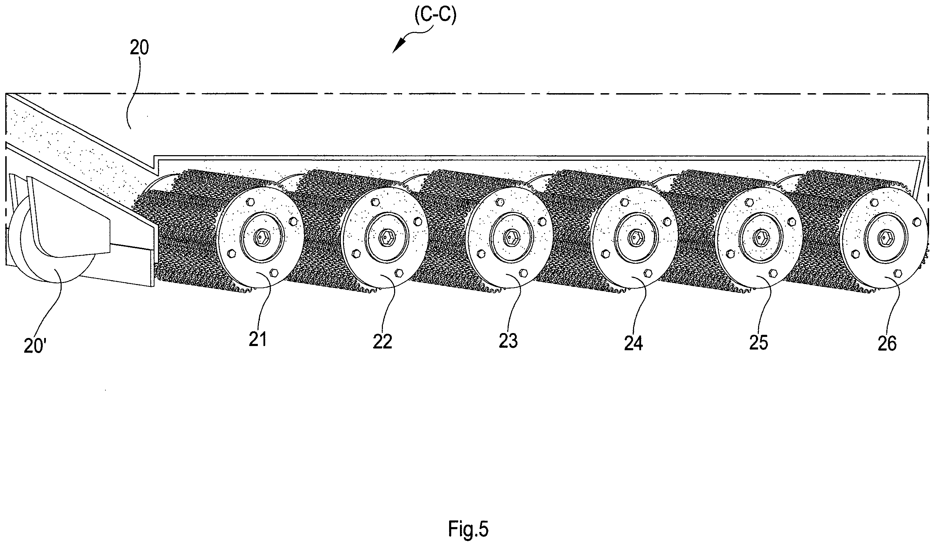

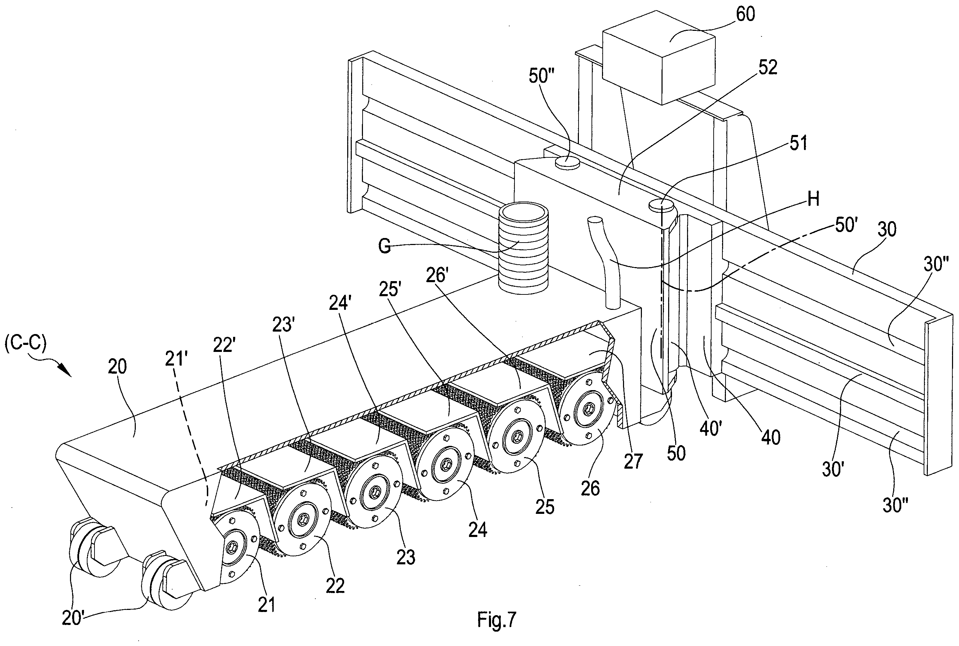

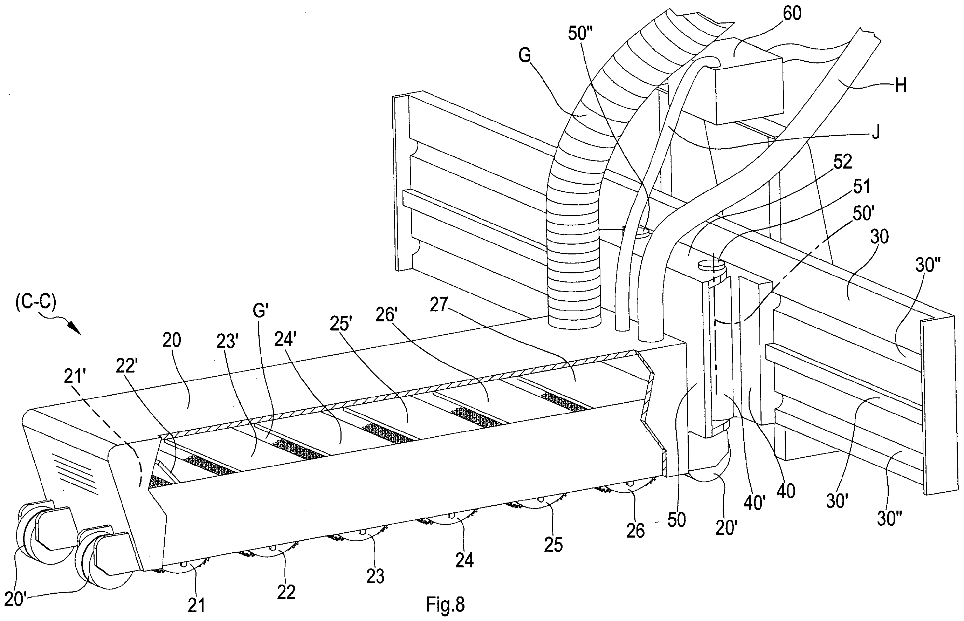

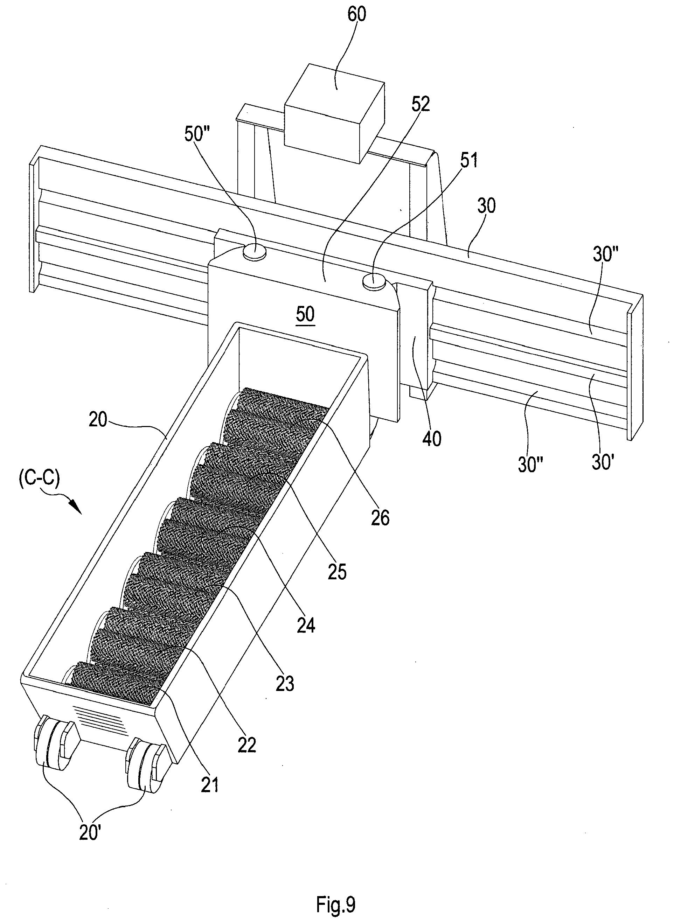

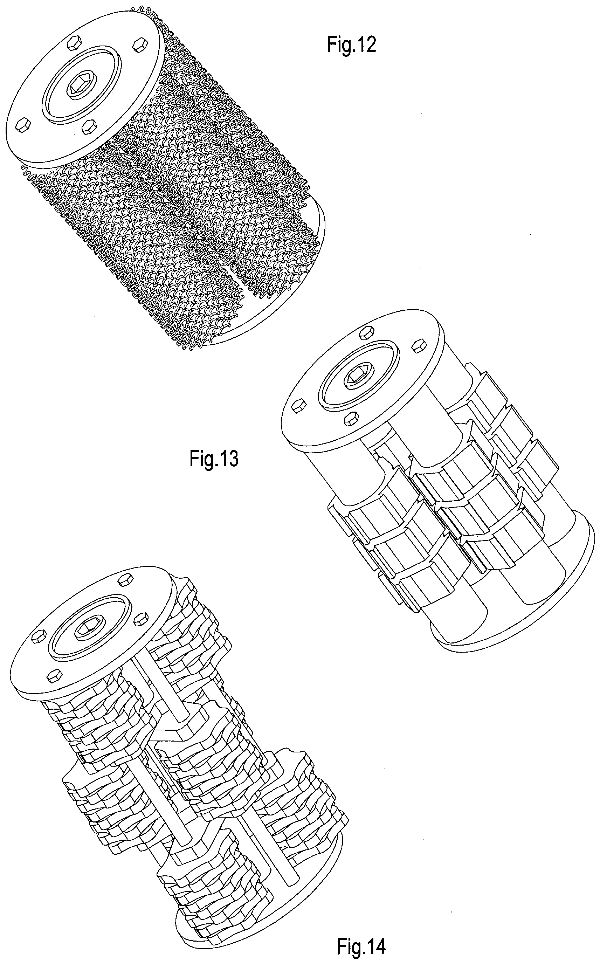

The drums with milling rollers 21, 22, 23, 24, 25, 26, Figures 5, 6, 7, 8, 9, 10 ,11, building our scarifying machine are preferably but not limiting six. The work planarity of each one is managed by the PLC, which according with the setting of the operator will provide for the removal of a part of the road markings avoiding the contact with the road coating; clearly all the drums can have a different arrangement of the tools, in order to be able to manage the removal for the best and with a higher speed, as well as the type of tools will be mounted according to the needs of the road markings to be removed, Figures 12,13,14;

There are three preferred typologies of tools:
- Milling drum with box tools, Figure 12;
- Milling drum with hoe tools, Figure 13;
- Milling drum with diamond tools, Figure 14.

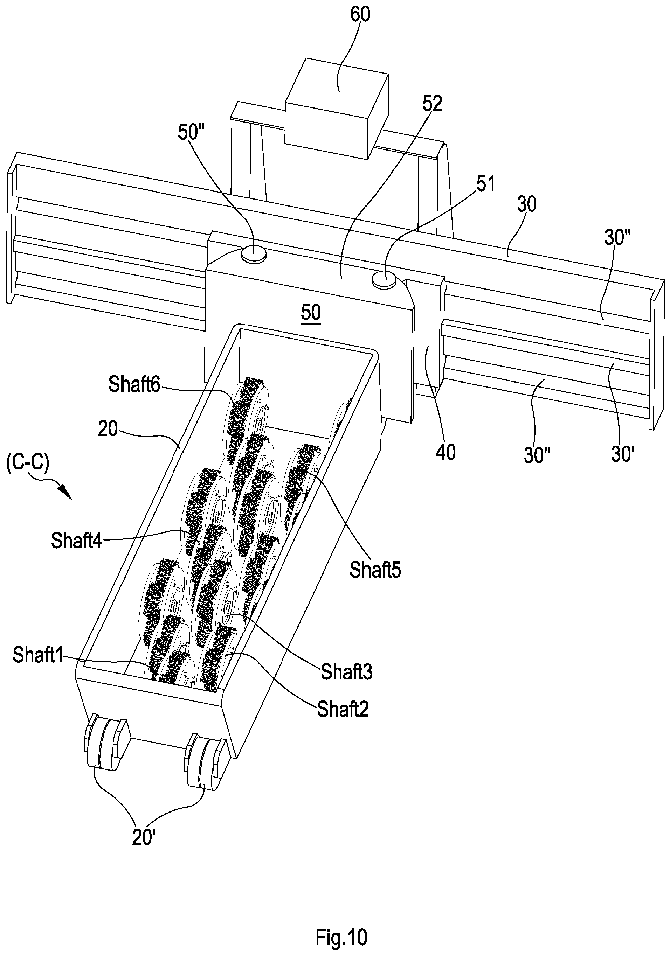

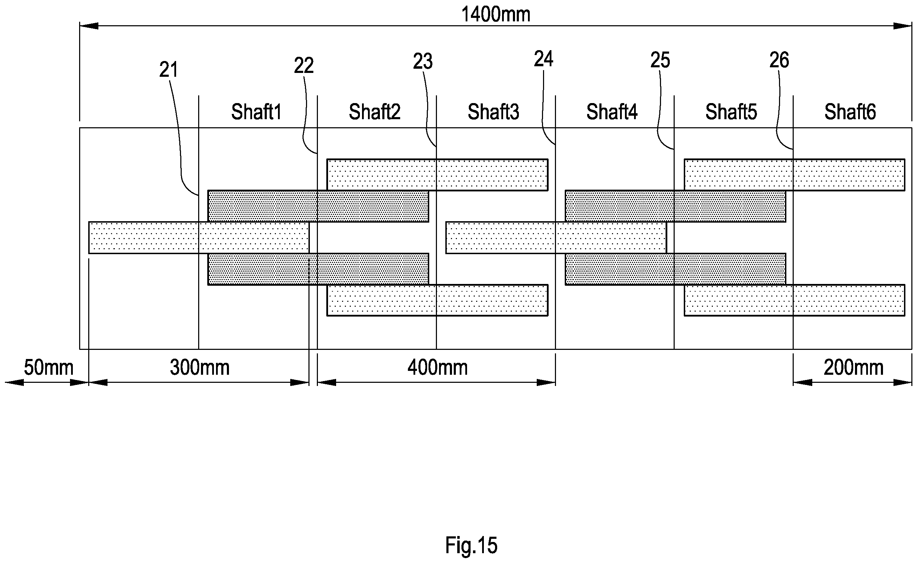

The axis bases among axes 21, 22, 23, 24, 25, 26 of the drums arranged in sequence are vertically swinging, transversally displaceable and revolving, in a preferred form of execution provided with disks not alligned as inducated below, disk drums, Figures 10, 15, 16,

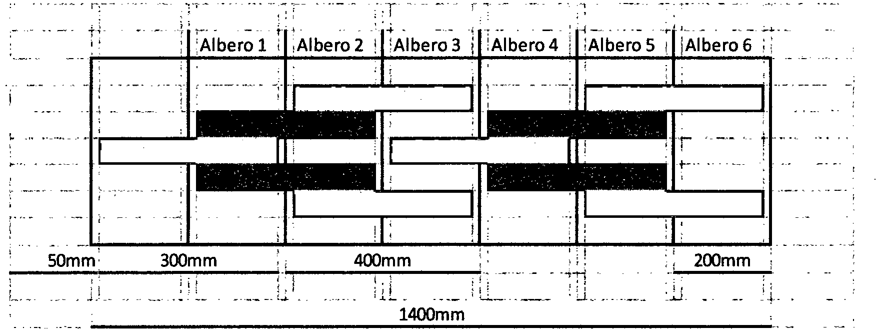

In presence of a disconnected road coating, each axis can adapt its drum for the best.

But above all it allows to remove the typology of road markings called "noisy band", or that called "drop" containing glass microspheres.

Without the control of PLC, Tablet, Smartphone or remote Server (system software) it would not be possible to remove these typologies of road markings without break into the road coating, because owing to its own weight each drum would try to break into the surface where no paint to remove was present; he shot-peening performed immediately afterwards in the same pass, will allow to leave the surface clean without disturbing the utilities and free to receive a possible further paint.

### Work process

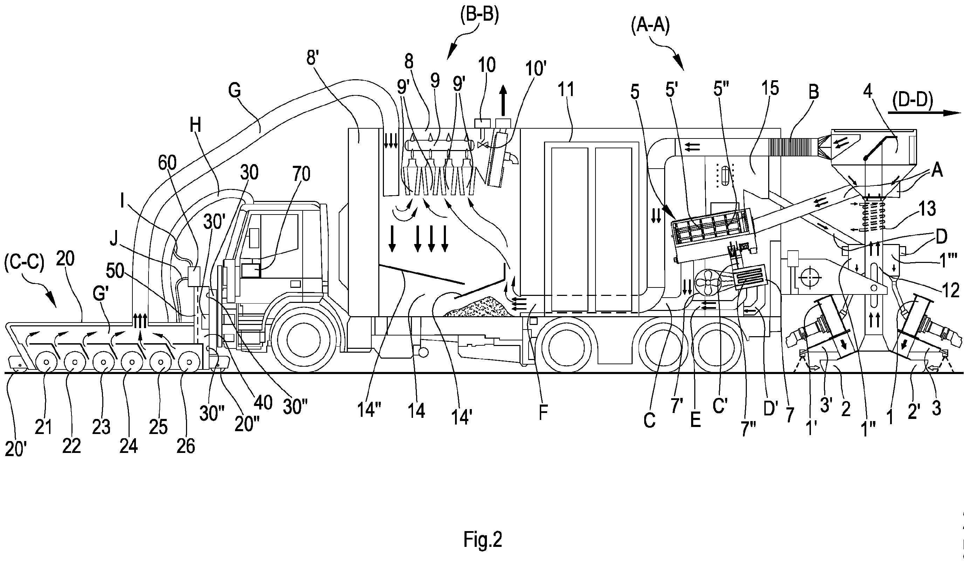

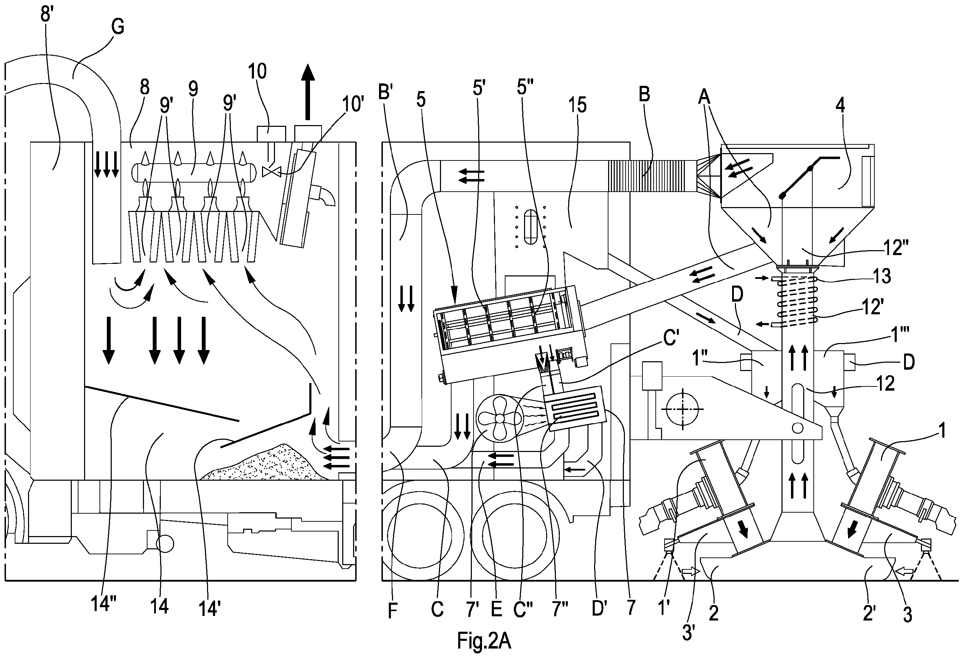

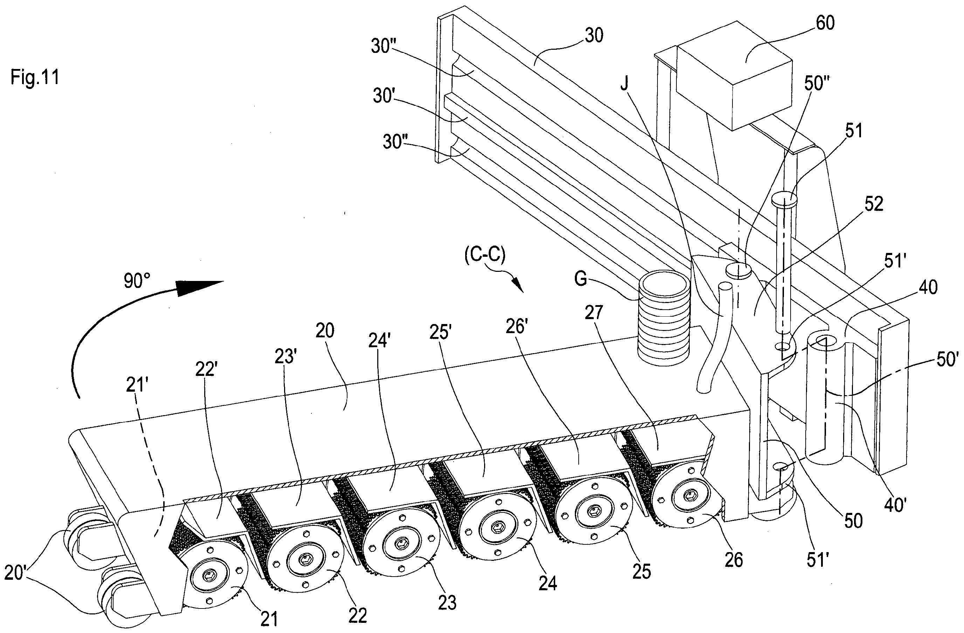

The lorry is driven in the work area, when the lorry stands in the yard area the auxiliary engine 8' is started and the hydrostatic transmission 11 is turned on; the safety pins of the scarifying unit are unlocked and it is turned of 90° and locked, 50, 52, 51, 51', 50', 40, 40' through the fitting plates 50, 40, 30 on the self-propelled vehicle ready to move in the direction of the road axis X, Figure 11, the safety brackets of the shot-peening bench 2, 2' are removed and the unit is lowered till the ground, Figures 2A, 7, 8, 9, 10, 11.

The scarifying action starts 20, the shot-peening unit (A-A) and the fan 9, reached the start point need just one input, then the computer 70 will memorize the position allowing also the shot-peening machine 20 to start in the same point, the same applies for the stop; the operator must drive the vehicle trying to keep an approximate direction, the machine will take care automatically to follow the line to remove.

The basic principle consists in utilizing the scarifying machine 20 only to remove the "protruding" parts without breaking into the road coating. The number of drums and the rotation speed are chosen automatically by the programme to optimize results and working speed. Same principle applies to the shot-peening unit, where the rotation speed and the quantity of abrasive can vary. The whole system aims to the highest yield and speed.

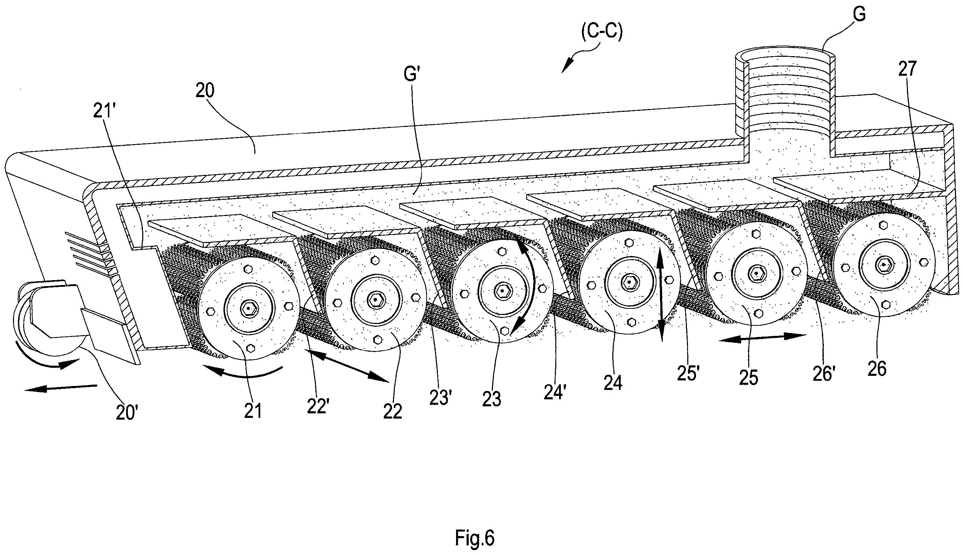

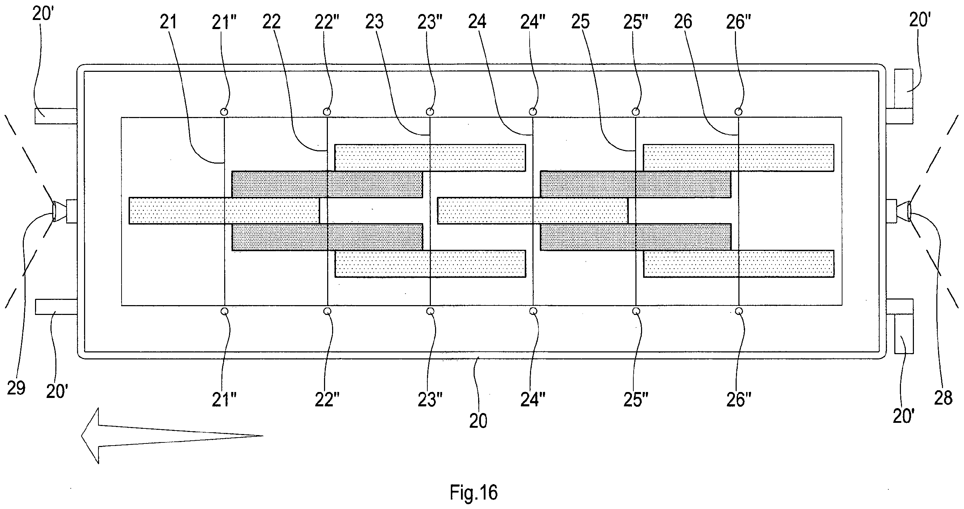

Besides the cameras 28, 29, Fig.16 arranged in front of and behind the scarifying machine 20 and the shot-peening machine A-A, both not shown in the figures, that provide indispensable images of the conditions of the road markings to be removed, of the road surface and of the achieved result, a sequence of inductive sensors 21", 22", 23", 24", 25", 26" , placed at the upper ends of each shaft 21, 22, 23, 24, 25, 26 and at the end of the lateral translator of the scarifying machine 20, provide the position of the axis X (axis of the direction of motion) both of the scarifying machine and the shot-peening machine and the position of the axis Y (transversal axis of rotation of the rollers and of lateral translation) Figures 6, 16. The captured images are elaborated to provide direction, plane, status of the line and of the road and the achieved result.

For the direction, the information is transmitted to the translators and through a led bar to the driver to help him to drive the vehicle.

For the plane, the information is transmitted directly to each shaft 21, 22, 23, 24, 25, 26 of the scarifying machine 20, giving already the position to keep.

For the status of the line, the information is divided in three blocks: scarifying machine, shot-peening machine and working speed.

About the scarifying machine 20, the system seeks the optimization between number of shafts and rotation speed: it could also suggest the change of the typology of the utilized tools, Figures 12, 13, 14.

The shot-peening machine can receive the input for the quantity of abrasive and for the rotation speed.

The working speed fits to the two working processes to achieve the highest efficiency.

The captured images are superimposed among them to provide the above-mentioned information, to elaborate an average but also to provide and keep an historical record of the performed work; the same cameras provide the system with the indispensable information for the thickness of the line, the plane of the road, possible not removable obstacles and the achieved result. According to the skill of the operator the parameters to be inserted in the computer can be changed, but in case a different typology of demarcation is noted a specialized operator can remotely access and modify the basis parameters.

Cameras 3D Display:
- Scarifying machine x2, the front one in front of the mill 29 and the rear one, after the mill to see immediately the result, Figure 16;
- Shot-peening machine x2, not shown in the figures, a third in front of the shot-peening machine and a fourth after the shot-peening machine A-A, Figure 2,

To have a full view and survey.

The cameras 28, 29 send the images to the board computer, it superimposes the images to one memorized and hence obtains the information to achieve the plane line, according to the acquired data, then the PLC sends to each shaft the position to keep, on each shaft 21, 22, 23, 24, 25, 26 inductive sensors 21", 22", 23", 24", 25", 26" are suitable mounted, to know exactly its position, Figure 16.

The rear cameras survey the result to be able to adapt the rotation and motion speed of the scarifying machine and the working intensity of the shot-peening machine. According to the same above-mentioned principle, the virtual connection occurs through the main computer.

Here it is possible to carry out the adjustments and the settings of the basis software and change the parameters.

According to the received inputs the scarifying machine 20 proceeds, the milling rollers of the drums 21, 22, 23, 24, 25, 26, rotating in the opposite direction against the motion, Figure 6, removing the materials composing the road markings, the milling and residual materials are put down by the bulkheads 21', 22', 23', 24', 25', 26', 27, of the rollers and through their discharge paths and slits convoyed through the suction ducts G' G into the waste collector 8, Figures 2, 2A, 6, 7, 8.

All the machines of the new technique have big problems of abrasive cleaning before to put it again in the cycle, deteriorating its abrasive characteristics, being from one side polluted by other residual materials and from the other side having stuck on it bituminous, gummy and other materials.

Moreover, the high temperatures reached by the adhesive contribute to further worsen the situation.

The Applicant has embodied the following improvements and innovations on the object of this invention:
The shot-peening unit (A-A) composed of inlet means of the external air 2, 2', of means throwing the microspheres 1, 1', of a sequence of ducts A, B, C', C, for the passage of said microspheres together with the collected impurities and the residual materials of the working process, of separating, collecting and recycling means, D' D
includes
   - a turbine work bench 3, 3' able to translate laterally, provide with a suction feeder of the external air 2, 2' suitably shaped to channel the incoming flow of the external ait which crosses the jet of the microspheres in the zone between the outlet of the turbine and the contact with the ground to remove a part of the heat accumulated in the acceleration phase, a group of turbines 1, 1' from 1 to 4 or more couples arranged at 45°, with cone-shaped curved blades, opposed and counter-rotating, an intercooler 13 downstream the turbines cooling the microspheres in their way back, said work bench 3, 3' able to translate horizontally and orthogonally to the direction of motion;
   - a separation group composed of at least two cyclones 4 provided with sliding blocks to slow the abrasive flow and covered in turn by an abrasion proof protective film, and at least two sieves 5, 7 with rotating drum and steel grids with free pins, with at least three stages each 5', 5", provided compressed air with washing/cooling system and intercooler 7',7", first 5 to separate the fine dusts and the residual material C, C', then 7, to separate the bitumen E and extract the clean decontaminated and cooled microspheres D' and their final cooling in the tower elevator 15 and recycling D, in the containers 1", 1"',
Figures 2, 2A;

This modification and improvement has allowed to increase the duration of the microspheres, moreover to treat surfaces coated with modified bitumen (polymeric bases) that nobody of the competitors is able to treat.

Moreover, the PLC software surveys the position to avoid the fortuitous opening of the abrasive valves.

### The Suctions/Separation group

The suction and filtering unit (B-B) includes an aspirator or fan 9, a collector box 8 of the material of the working cycle, the general exhaust collector F, the shot-peening unit A-A and the duct G,, G' of the scarifying machine 20, an auxiliary and autonomous power generator 8' to distribute the motion in autonomous way to the machine through a hydrostatic transmission 11, and to generate the hydraulic and electric power necessary to all the units and utilities enslaved to the machine;
it is provided with conic-shaped cartridges 9' of fireproof polyester self-cleaning by composed air, and with a unit for stoppage verification and washing automatic setting; with the help of a new type of nozzles 10' it is possible to detach the dust particles that usually remain inside the plies of the filtering cartridges, allowing to preserve their filtering integrity a longer time.

The compressed air used for washing is produced by a sliding-vane toroidal compressor, which after filtering and cooling is directly stored into the chamber placed inside the suction box in the zone of the clean air, which houses together the electro valves feeding the washing nozzles, being also arranged inside the suction box.

By all the previous machines, the skill of the operator had a great influence, because he had to prevent the fatigue of the filtering cartridges, monitoring the depression indicator and acting on the control unit (cycling generator of impulses), varying the frequencies of work and pause. If for whatever reason this particular had escaped him, it should have caused the stop of the machine by clogging of the cartridges.

Very often, to prevent this drawback one went to the extremes, causing noticeable waste of compressed air, besides to reduce the duration of the filtering elements.

The machine subject of this invention, to obviate said drawbacks, has entrusted the management of the whole box to the PLC, the system besides monitoring the clogging of the cartridges, the quantity of treated air, the pressure difference between the two plenum chambers (air treated, air to be treated), manages the washing valves and the revolution speed of the fan, notifying any action undertaken by the operator in the cabin. This has allowed saving the applied energy to drive both the fan and the compressor.

### Electronic Management Process/Machine

The project of the Applicant, foresees a great number of technological innovations that we have described in detail and very important, but we are sure that the embodiment of the system software with PLC, Tablet, Smartphone or Wi/Fi Sever interface represents one of its peculiar advantages. The fact to allow the dialogue man-machine (command, setting and control), the remote diagnostic, the automation of the vital functions and the visualization of the state of the machine, reduce the complexity of use of the machine, reduce the complexity of use and management, besides to increase reliability and productivity.

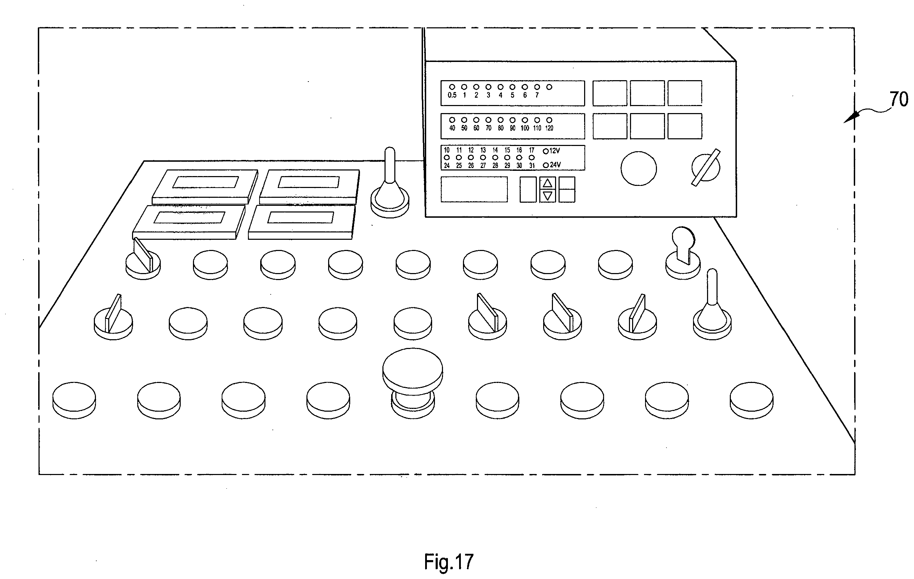

The dialogue unit (Monitor Touch Screen), placed on the middle of the cabin console 70, Figure 17, allows the operator to talk with the PLC (process control unit), consequently with the machine, skimming through the various screen views he can monitor the functions, give commands and display the status of the services.

The PLC or equivalent electronic device (process and software control unit) represents the brain of the machine, it collects the signal received from bulbs, transducers and sensors installed on board and from the 3D display system, drives the commands dictated by the operator in the cabin and in case of need by that on the ground, through the radio control in an autonomous way, in the period of fractions od second, compares the requested commends to those programmed and execute them. In case of incorrect moves, besides to prevent to put them into effect, provides to send an acoustic signal followed by a text message to the operator in the cabin.

The Flash Memory, all the commends manageable by the operators, by the PLC and by the PC and by the maintenance people are memorized on a memory card, creating a programme, by means of different passwords any one of the above-mentioned staff according to its duties can access the software, visualize historical data, modify some parameters and reset alarms.

The programme (that is the menu) can be modified only by the authorized personnel, any try of modification, copy or tampering is not authorized by the system.

If the Applicant creates updates or modify settings, it can by Customer authorization perform the update via Internet and mobile telephony.

The Applicant is qualified and authorized to access the PLC via GLTE and in general via Internet and mobile telephony, to perform the remote diagnostic. All the service commands of the machine are autonomous, the system performs a certain number of checks per second (loop, software monitoring operation and maintenance) activating and deactivating service commands like: start of radiators, washing of filters and so on. Increasing and decreasing: oil flows, revolution number and so on.

It memorized all the status: work, anomalies, messages transmitted to the operator, maintenance actions and any other requirement of the programming phase, creating an archive (history), which can be remotely downloaded.

In the same way, it is possible to perform the remote diagnose of the machine.

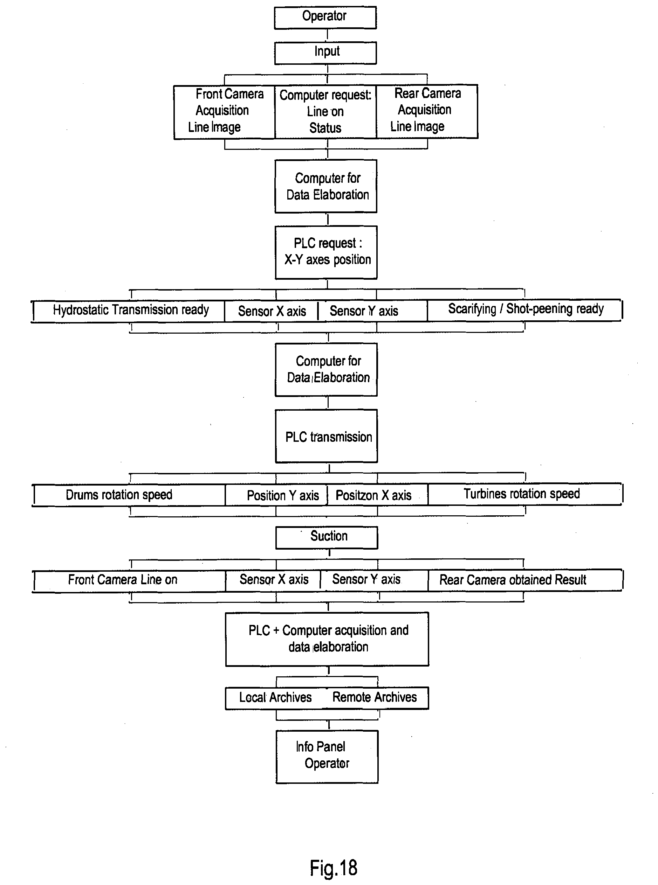

The Block Diagram
of the Figure 18, shows the sequence of data survey and acquisition, and data elaboration, memorization and transmission, for the control, and command actions of the operator.

### Fields of application

➢ Removal of road markings (incl. thermoplastic, industrial surfaces and so on).
➢ Cleaning and roughening of bitumen and reinforced concrete road surfaces, including residues of grout in tunnels (removal of chemical products in consequence of accidents).
➢ Cleaning and roughening of platbands of concrete during the maintenance of motorway bridges, with guaranteed tearing resistance as well as of steel plates during the building or maintenance before the application of primer, waterproofing agents and road coating.
➢ Gum removing of runways of bitumen or concrete (touch-down zone) and parking areas (aprons).
➢ Cleaning and roughening of valuable paving (granite, porphyry and so on).

### Autonomous self-propelled vehicle with suction, storage and housing of the magnetic group recovering metallic materials.

The continuously increasing cost of the abrasive, the new airport orders, the introduction of the new sound absorbent asphalts and the troubles coming from the "lost" grit on the roads have led the Applicant to start a study to elaborate a new concept of recovery of the same grit following the shot-peening process regenerating the surface coating of roads, motorways and runways.

It is also part of this invention, completing the shot-peening process, a magnetic group mounted on a self-propelled vehicle placed after the shot-peening machine removing ad recovering the grit lost during the shoot-peening work.

This is particularly useful for the safety of the means and of the persons working and circulating on the coating surfaces after the treatment.

The presence of not recovered grit can in fact cause various safety problems for the users and means operating on roads, motorways, runways and landing strips. The simple cleaning and suction process by the means of the known technique does not guarantee the complete removal of the grit left on the ground which in most cases remains entangled on the ground.

The subject of this invention cures the problems still unresolved by the means of the known technique.

The grit left on the ground is "found out" and freed to be sucked in by the magnets that remove it from the surface and convey it from a capture point to a release point by means of conveyor belts to collection basins or containers.

The new setting-up concept foresees a light self-propelled trailer, towed by the shot-peening unit, more precisely this invention refers also to a self-propelled mechanic-magnetic unit, collecting metallic materials, mainly on road coatings and runways, characterized by the fact it includes an autonomous self-propelled trailer, provided with:
- brushes on the front part to free and remove the grit attached and entangled in the modified bitumens that are tempered during the shot-peening treatment;
- dry suction and filtering means avoiding producing powders during the brushing;
- fully automated rear magnetic group with adjustable rotation and ground clearance automatically controlled according to the settings to control the removal of said materials, particularly grit;
- collector of the recovered lost grit;
- suction and conveyance ducts of the contaminating residual products of the grit to the discharge containers;
- washing and storage means.

Previous executions of this kind are not known to the Applicant.

A preferred form of execution of the subject of this invention foresees:
- a magnetic group composed of three shafts, two idle and one motorized, a chain or track rotating around and conveying the Neodymium bars suitably spaced;
- a honeycomb conveyor belt which interposes between the magnets and the grit to capture, the material remaining "glued" on the belt on the single bar until it comes to the apex of the climb, here a further shaft provides to strength the belt forcing the microspheres to come off to reach the collection basin.

In a different form of execution of this invention the magnetic group of the mechanic-magnetic self-propelled mean, collecting the metallic materials, includes a PVC belt supported by a Polyzene plate rotating on two idle and one motorized pins, under said belt a tripolar fixed Neodymium (Nd) three-layer plate of 75 mm thickness, of length up to 2500 mm, placed at a height up to 130 mm to the ground, allowing the automatic and continuous "capture" of the ferrous materials on said belt, performing afterwards the transportation of said materials and their lateral release by means of a cochlea collecting and discharging them into a storage basin.

In another embodiment of the present invention the magnetic group of the self-propelled mechanic-magnetic mean, collecting metallic materials, includes a first Neodymium (Nd) fixed plate capturing on a PVC belt the metallic materials (grit), that are retained during their transportation by a Neodymium (Nd) magnetic pulley and by a second Ferrite (Fe) plate arranged inclined with respect to the said first Neodymium plate, lifting from ground and conveying said materials until the release point in a collection basin-cochlea, a belt-tightener transmission roller allowing the sliding of the belt on said first and second plate.

In a further form of realization of this invention a magnetic group M includes a two-way carriage, containing two fixed magnetic Ferrite-Neodymium drums, with minimum diameter of 600 mm, each with a fixed magnetic nucleus, each wrapped out by a jacket or envelope counter-rotating, these rotating from a magnetized collection point of the metallic material to e release point without magnetic attraction where the caught material falls in a storage and recovery basin.

A light self-propelled trailer 1, D-D, towed by the shot-peening unit A-A, is provided with brushes 122 on the front part removing the grit 107 attached to the modified bitumens that are tempered during the shot-peening treatment, of dry suction and filtering means 103, suction box 104 and storage container 133, in order not to produce powders during the brushing, of a rear fully automated magnetic group M, with adjustable rotation and ground clearance automatically controlled according to the settings to control the removal of the grit, of a collection basin 105 of the recovered lost grit. The suction and conveying duct 103 of the contaminating debris and residual materials of the grit leads to the suction box 104 operated by the fan 115, where, kept by the filter 115', they fall in the storage container, the suction duct 103 foresees a diffuser 116 decelerating the flow for the fall in the collecting basin of the grit possibly sucked because of the brushing 122.

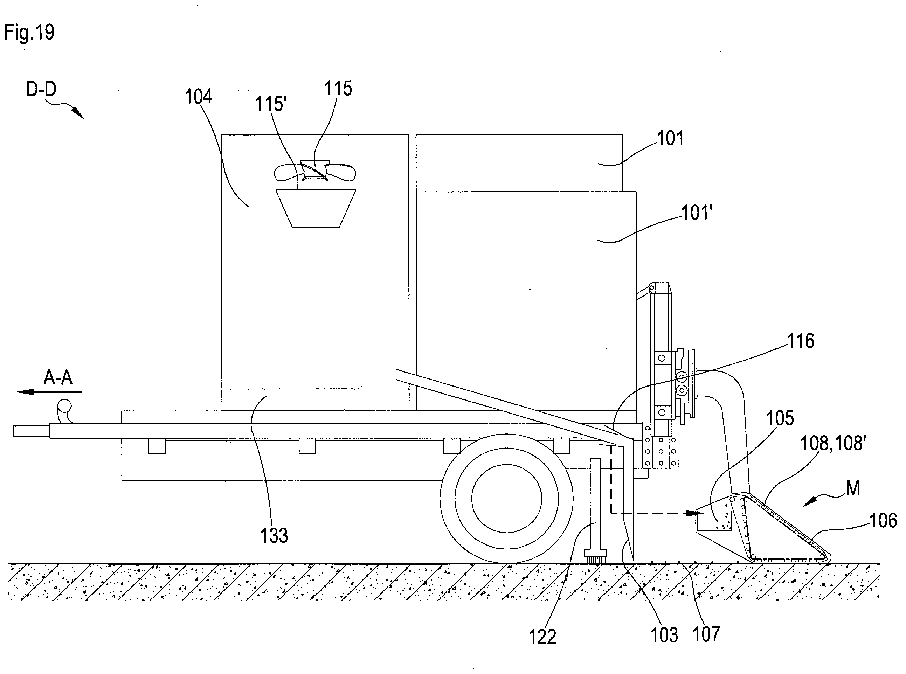

The self-propelled mean includes a power unit 101' and an electronic computerized control unit 101, Figure 19.

### EXAMPLE 1

A preferred form of execution of the invention foresees a magnetic group M composed of three shafts, two idle 102', 102" and one motorized 102, a chain or track rotating around drives a belt 108, 108' conveying the Neodymium bars 106, of 20 mm x 20 mm x 240 mm spaced of 50 mm.

A honeycomb conveyor belt 108, 108' interposes between the magnets 106 and the grit 107 to be captured, the material remains "glued" on the belt because of the single bars until it reaches the apex of the climb, here a further shaft 102'" provides to strength the belt 108 forcing the abrasive, grit, 107 to detach itself reaching the collection basin 105.

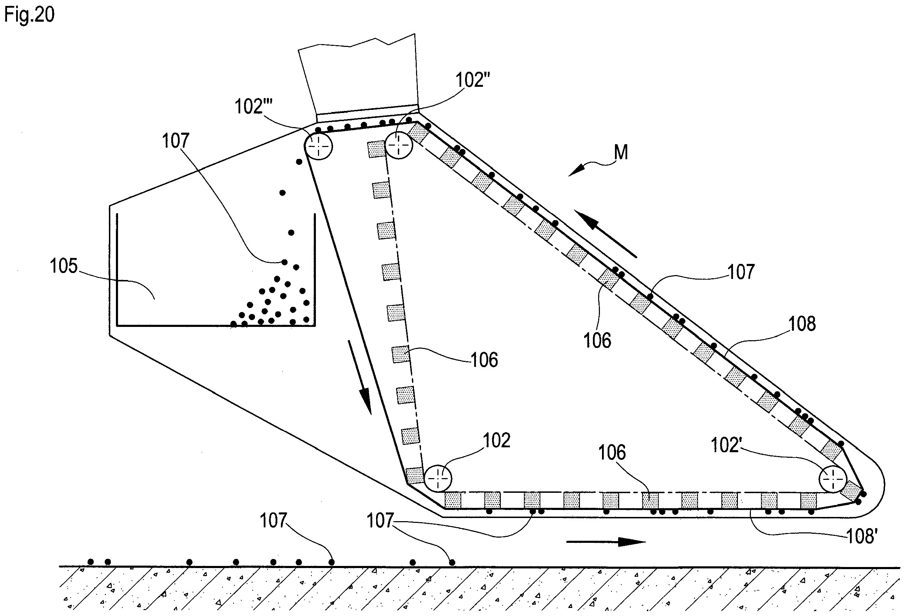

Advantages: the grit remains attached always to the single bar 106, not be able to "fall", being the part in contact with the ground 108' widely adjustable in height, of a length of at least 500 mm, Figure 20.

### EXAMPLE 2

In a different form of execution of this invention the magnetic group M of the self-propelled metallic-magnetic mean D-D collecting metallic materials, includes a PVC belt rotating on two pins 102, 102' one of them motorized, under said belt a tripolar fixed Neodymium (Nd) three-layer plate 106 of 75 mm thickness, of length up to 2500 mm, placed at a height up to 130 mm to the ground, allowing the automatic and continuous "capture" of the ferrous materials 107 on said belt 108, performing afterwards the transportation of said materials and their lateral release by means of a cochlea 105'collecting and discharging them into a storage basin 105.

Under the belt is placed the three-layer Neodymium plate 106 of 75mm which can remains up to 130 mm height from ground continuing anyway to make its effect.

Over the plate 106 there is a Polyzene sheet 119 to support the belt and to prevent it to graze on the stands of the magnet below. There are the two external pulleys 102, 102', suitably spaced to the Nd plate in order not to alter the flow lines of the magnetic field, that strength the PVC belt 108 and a number of guide rollers to maintain this last aligned, the belt working to remove the captured grit 107. The grit 107 is discharged laterally, from there a cochlea 105' is working to convey the material to the collection/storage basin 105.

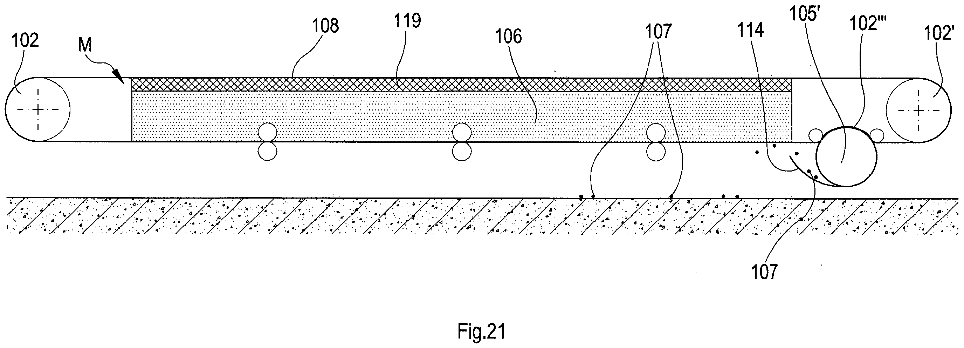

It is a solution for sure very effective, even if of large overall dimensions and the recovery of the grit from the release point is just a bit more difficult. Figure 21.

### EXAMPLE 3

In another form of execution of this invention, the magnetic group of the self-propelled mechanic-magnetic mean, collecting metallic materials, includes a first fixed Neodymium (Nd) plate capturing on a PVC belt the metallic materials 107 (grit), that are retained during their transportation by a magnetic Neodymium (Nd) pulley 102' and by a second Ferrite plate 109 arranged inclined with respect to said first Neodymium (Nd) plate 106, lifting from ground and conveying said materials 107 until the release point into a collection basin-cochlea, a belt-tightener transmission roller 102'" allows the sliding of the belt 108, 108' rotating trough three shafts, two idle 102', 102" and one motorized 102 on said first 106 and second 109 plate.

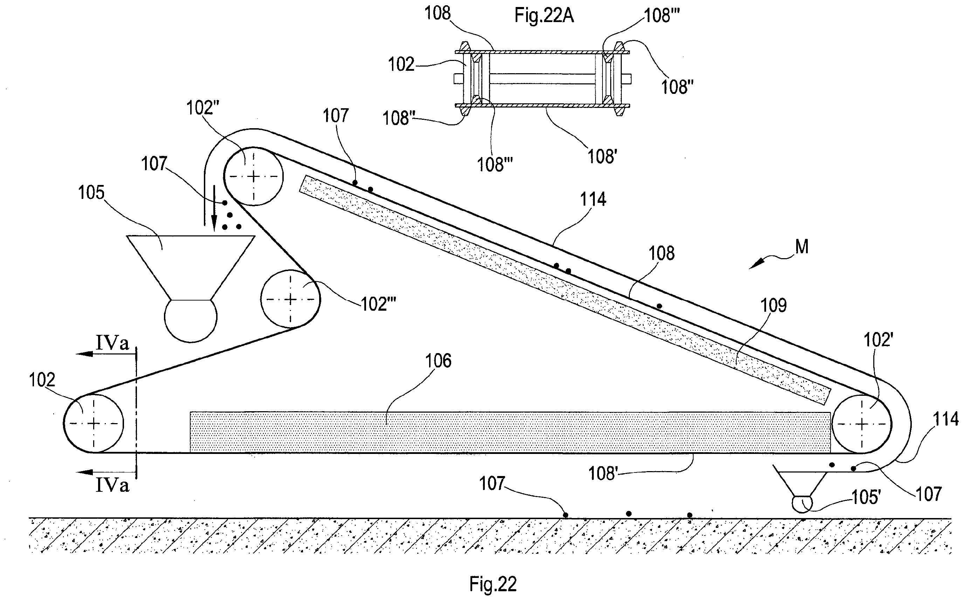

The Neodymium plate 106 is fixed and on its upper part is placed a Ferrite plates 109, to recover the grit, which would fall sat the end of the first plate before to be captured by the heading Neodymium pulley 102', a carter 114 is arranged there, the not retained grit falling no longer on the ground but into the carter, from there the magnetic pulley 102' provides to recover the remaining through a cochlea 105' from there the collection basin 105 is reached, Figure 22.

Also in this version the belt 108, 108' shows longitudinal profiles 108‴ acting as guides and profiles 108" acting as lateral bulkheads, Figure 22A.

### EXAMPLE 4

In another form of the execution of this invention, a magnetic group M foresees a two-way carriage, including two fixed magnetic drums 110 mixed of Ferrite 112 - Neodymium 111, with minimum diameter of 600 mm, each with a fixed magnetic nucleus 11, 112 and a demagnetized part 113, each wrapped by a jacket 110' or envelope counter-rotating, these rotating from a magnetized point 107' of collection of the grit towards a release point 107" without magnetic attraction where it falls into a collection and recovery basin 105.

In this execution the magnetic group is housed on a carriage which can also take the motion directly from the road

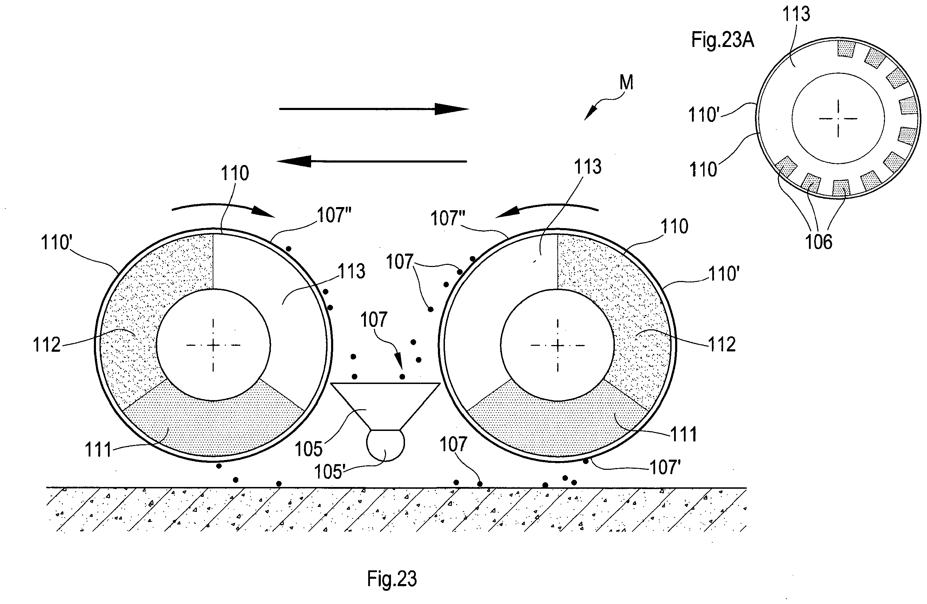

This solution very simple, but very heavy, is a good concept because it includes few pieces, no belt. Here the grit 107 "glues" directly to the jacket of the drum and when it reaches the free zone discharges itself into the basin 105, Figure 23.

In a different version the solid fixed drums can be replaced by a fixed crown of Neodymium bars 106, internal to the counter-rotating jackets 110', Figure 23A

In all the situations the suction and collection ducts in case of the semitrailer can be also connected to the suction box of the shot-peening unit B-B. Figure 2, 2A.

### Fields of application

This invention finds peculiar application in the decontamination of the runways after shot-peening, avoid dangerous ingestions of dispersed metallic grit not recovered by the shot-peening machine into the aviation engines, avoiding also troubles on roads and motorways, besides cleaning and decontamination operations in different environments, reducing the costs for the abrasive (grit).

## Claims

1. High performance self-propelled combined shot-peening machine for the treatment of the coating surfaces of bituminous conglomerate, asphalt, concrete or metal, including a shot-peening unit (A), a suction, filtering, separation and storage unit (B), coupled together,
- the shot-peening unit (A) consisting of feeding means (2, 2') of the fresh external air, of means throwing the microspheres (1, 1'), of sequence of ducts for the transit of said microspheres together with the collected impurities and the residual materials of the working process, and means for separation, collection and recycle (5, 8, 9);
- the suction and filtering unit (B) consisting of an aspirator or fan, a container of separation and collection of the material of the working cycle, dusts, filler and others, an auxiliary power generator (11) for the autonomous motion distribution to the machine through a hydrostatic transmission and for the generation of the hydraulic and electric power needed by all the units and utilities enslaved to the machine,
- wherein
- the high performance self-propelled combined shot-peening machine comprises:
- a scarifying unit;
- the shot-peening unit is provided with a further intercooler sieve for the cooling of the microspheres and their final decontamination from the bituminous residual adherent to them;
- a roller scarifying unit arranged on the front part of the self-propelled vehicle, to preliminarily remove the road markings before the subsequent shot-peening process;
- a self-propelled mechanic-magnetic unit collecting metallic materials, mainly on roads coating and runways, composed of an autonomous self-propelled vehicle, trailer or semi-trailer, provided with:
- brushes in the front part to free and move the grit attached and entangled to the modified bitumens that are tempered during the shot-peening treatment;
- dry suction and filtering means to avoid producing powders during the brushing;
- a fully automated rear magnetic group for the continuous capture of the ferrous materials, with adjustable rotation and ground clearance automatically controlled according to the settings to control the removal of said materials;
- a collection basin of the lost recovered grit;
- suction and conveyance ducts for scrap materials, debris and contaminating residual products of the grit to the discharge container;
- washing and storage means.

2. Combined shot-peening machine according to Claim 1, **characterized in that** the scarifying unit (C-C) is fully arranged on the vehicle on its front part and to whom is connected by means of two plates coupled together, a first frontal plate placed on the front chassis of said self-propelled vehicle, a second plate able to translate along the full length of said first plate to whom a pivoting and vertically adjustable plate is anchored which is integral to the rear end of said scarifying unit, allowing the scarifying unit to translate along the full length of the self-propelled vehicle, to set itself in height against it and to rise and turn over it by a rotation of 90°, for an easy transportation from the yard to the garaging place or workshop and vice versa.

3. Combined shot-peening machine according to Claim 1 or 2, **characterized in that** the scarifying unit (C-C) includes at least six drums with self-cleaning milling rollers, mounted on independent axes, arranged in sequence, rotating in opposite direction against the direction of the movement, adaptable to the working plane, moveable transversally, in height and slope, provided with tools of different typologies according to the needs of the road markings to be removed, the shot-peening performed in the same pass, allowing to leave the surface clean not disturbing the utilities and free to receive a possible further paint.

4. Combined shot-peening machine according to any one of Claims 1 to 3, **characterized in that** the milling rollers of the drums of the scarifying unit (C-C) have a different arrangement of the tools, so that the removal of the road markings can be managed for the best and quicker avoiding the contact with the road coating, in presence of a disconnected road coating, each axis adapting its drum for the best.

5. Combined shot-peening machine according to Claim 3 or 4, **characterized in that** the tools mounted on the drums or milling rollers are box tools.

6. Combined shot-peening machine according to Claim 3 or 4, **characterized in that** the tools mounted on the drums or milling rollers are hoe tools.

7. Combined shot-peening machine according to Claim 3 or 4, **characterized in that** the tools mounted on the drums or milling rollers are diamond tools.

8. Combined shot-peening machine according to any one of Claims 1 to 7, **characterized in that** the rotation axes of the drums of the rotating milling rollers of the scarifying unit (C-C) are provided with sensors to survey their position and the working data for their feedback of setting and control.

9. Combined shot-peening machine according to any one of Claims 1 to 8, **characterized in that** the scarifying unit (C-C) includes a bodywork with frame and bonnet which houses the rollers of the milling drums, partition bulkheads to separate and discharge the debris among the different rollers, intake and removal ducts of said residual materials at the box of the unit (B-B), a control station of the movements of rollers and plates, ducts for cables, cameras for the 3D display and measurement means, bulbs, transducers and sensors installed on board to collect and transmit all the captured signals and the PLC collected parameters.

10. Combined shot-peening machine according to any one of Claims 1 to 9, **characterized in that** in the scarifying machine the axle-bases among the drums arranged in sequence, vertically swinging, laterally displaceable and revolving, do not include a unique roller along their length but one or more side by side disks mounted side by side on different lengths of the axis, coupling and inserting themselves parallel to the other disks mounted on the different rotation axes.

11. Combined shot-peening machine according to Claim 10, **characterized in that** in the scarifying machine the drum shows a central shaft and two disks at the ends, a sequence of spindles on the circumference, these latter having inserted octagonal washers of thickness variable from 5 to 10 mm, the central hole of the washers being about the double of the diameter of the spindle allowing to operate also on disconnected surfaces.

12. Combined shot-peening machine according to any one of Claims 1 to 11, **characterized in that** it includes an integrated system software of survey, monitoring and control managed by a utility, like PLC, Tablet, Smartphone or Server-Router Wi-Fi, able to perform the following functions:
- collecting all the signals received from bulbs, transducer and sensors installed on board, automatically managing activating and deactivating all the service commands, forwarding the dictated commands to the cabin or ground operator, through the radio control and autonomously, comparing in real time the requested commands with the programmed ones and executing them, in case of incorrect move, besides to prevent to put it into effect, providing to send an acoustic signal followed by a text message to the operator in the cabin, setting the working speed according to the result obtained by the treatment, moving laterally and lifting or lowering the work benches according to the need;
- front and rear 3D display and measurement means coupled to said utility to allow the assistance to the driving of the lorry, let the scarifying machine and the shot-peening machine working correctly, set, control and record the entire work process.
- a diagnostic routine/application included in said utility, with both local and remote inquiry, allowing remote sensing and actions, allowing the utility to directly modify the state of the machine as well as update the software, as well as optimize the process in progress, said process being remotely assisted if the operator likes to confer with the control centre.

13. Automated process using the machine according to any one of Claims 1 to 11, managed by the software applications according to Claim 12, **characterized in that** it includes,
a. implementation of the computerized management of the machine to control all the mechanical, pneumatical, electric and electronic components;
b. the implementation of the remote diagnostic with an extremely simplified and ergonomic user interface;
c. the reduction to a single operator assigned to control the whole process, also with the possibility of a fully remote management with or without operator, subjecting the surface to be treated to two treatments - integrated milling and shot-peening - by a single pass, adapting itself to the road profile and guaranteeing to remove only the protruding part of the road markings, subsequently immediately regenerating said surface noticeably reducing the critical factor of the working time, eliminating the possibility of error in the application of the treatment.

14. Automated process according to Claim 13, suitable and compatible to a remote management and operation of the whole working process, in absence and without the need of a local operator in a fully automated ad autonomous way.

15. Use of the shot-peening machine according to any one of the Claims 1 to 12, for the removal of the road markings and the cleaning and regeneration of the macro/micro roughness of the road and motorway coatings, including coatings of modified bitumen (polymeric bases).

16. Use of the shot-peening machine according to any one of the Claims 1 to 12, for cleaning and gum removal of runways and removal of the road markings of the airfields.

## Patentansprüche

1. Selbstfahrende kombinierte Hochleistungs-Kugelstrahlmaschine zur Behandlung von Beschichtungsoberflächen aus bituminösem Konglomerat, Asphalt, Beton oder Metall, einschließlich einer Kugelstrahleinheit (A), einer Absaug-, Filter-, Trenn- und Speichereinheit (B), die miteinander gekoppelt sind,
- die Kugelstrahleinheit (A), bestehend aus Mitteln (2, 2') zur Zufuhr frischer Außenluft, Mitteln zum Werfen der Mikrokügelchen (1, 1'), einer Reihe von Kanälen für den Transport der Mikrokügelchen zusammen mit den gesammelten Verunreinigungen und den Restmaterialien des Arbeitsprozesses und aus Mittel zur Trennung, Sammlung und Wiederverwertung (5, 8, 9);
- die Saug- und Filtereinheit (B), bestehend aus einem Sauger oder Ventilator, einem Behälter zur Trennung und Sammlung des Materials des Arbeitszyklus, Stäuben, Füllstoffen und anderen, einem Hilfsstromgenerator (11) für die autonome Bewegungsverteilung an die Maschine durch a hydrostatische Übertragung und für die Erzeugung von hydraulischer und elektrischer Energie, die von allen der Maschine unterworfenen Einheiten und Versorgungseinrichtungen benötigt wird,
worin
- die selbstfahrende kombinierte Hochleistungs-Kugelstrahlmaschine aufweist:
- eine Vertikutierungseinheit
- die Kugelstrahl Einheit ist mit einem weiteren Zwischenkühlersieb zur Kühlung der Mikrokügelchen und ihrer endgültigen Dekontamination von den an ihnen haftenden Bitumenrückständen ausgestattet;
- eine Walzen-Vertikutierungseinheit, die am Vorderteil des selbstfahrenden Fahrzeugs angeordnet ist, um die Fahrbahnmarkierungen vor dem anschließenden Kugelstrahlvorgang vorab zu entfernen;
- eine selbstfahrende mechanisch-magnetische Einheit zum Sammeln metallischer Materialien, hauptsächlich auf Straßenbelägen und Landebahnen, bestehend aus einem autonomen selbstfahrenden Fahrzeug, Anhänger oder Sattelauflieger, ausgestattet mit:
- Bürsten im vorderen Teil, um den an den modifizierten Bitumenrückständen, die während der Kugelstrahlbehandlung angelassen werden, festsitzenden und verfangenen Sand zu lösen und zu bewegen;
- Trockensaug- und Filtermittel, um die Bildung von Staub beim Bürsten zu vermeiden;
- eine vollautomatische hintere Magnetgruppe für die kontinuierliche Erfassung der Eisenmaterialien mit einstellbarer Rotation und Bodenfreiheit, die automatisch entsprechend den Einstellungen gesteuert wird, um die Entfernung dieser Materialien zu steuern;
- ein Sammelbecken für den verlorenen, wiedergewonnenen Sand;
- Absaug- und Förderkanäle für Schrott, Schutt und kontaminierende Restprodukte des Sandes zu einem Austragsbehälter;
- Wasch- und Aufbewahrungsmittel.

2. Kombinierte Kugelstrahlmaschine nach Anspruch 1, **dadurch gekennzeichnet, dass** die Vertikutierungseinheit (C-C) an ihrem Vorderteil vollständig am Fahrzeug angeordnet ist und an der mittels zweier miteinander gekoppelter Platten eine erste Frontplatte angebracht ist am vorderen Fahrgestell des selbstfahrenden Fahrzeugs eine zweite Platte, die sich entlang der gesamten Länge der ersten Platte bewegen kann, an der eine schwenkbare und vertikal verstellbare Platte verankert ist, die fest mit dem hinteren Ende der Vertikutierungseinheit verbunden ist und das Vertikutieren ermöglicht Einheit, die sich entlang der gesamten Länge des selbstfahrenden Fahrzeugs verschieben lässt, sich an das selbstfahrende Fahrzeug anpasst und es durch eine Drehung von 90° anhebt und umdreht, für einen einfachen Transport vom Hof zum Garagenplatz oder zur Werkstatt und zum Schraubstock umgekehrt.

3. Kombinierte Kugelstrahlmaschine nach Anspruch 1 oder 2, **dadurch gekennzeichnet, dass** die Vertikutierungseinheit (C-C) mindestens sechs Trommeln mit selbstreinigenden Fräswalzen umfasst, die auf unabhängigen Achsen montiert, hintereinander angeordnet und gegenläufig rotierend sind die Bewegungsrichtung, anpassbar an die Arbeitsebene, quer, in Höhe und Neigung beweglich, ausgestattet mit Werkzeugen unterschiedlicher Art entsprechend den Anforderungen der zu entfernenden Straßenmarkierungen, das Kugelstrahlen wird im selben Durchgang durchgeführt, was dies ermöglicht Lassen Sie die Oberfläche sauber, ohne die Versorgungsleitungen zu beeinträchtigen, und lassen Sie sie frei, um eine eventuelle weitere Farbe zu erhalten.

4. Kombinierte Kugelstrahlmaschine nach einem der Ansprüche 1 bis 3, **dadurch gekennzeichnet, dass** die Fräswalzen der Trommeln der Vertikutierungseinheit (C-C) eine unterschiedliche Anordnung der Werkzeuge aufweisen, so dass die Entfernung der Fahrbahnmarkierungen erfolgt kann optimal und schneller gesteuert werden, indem der Kontakt mit dem Straßenbelag vermieden wird, bei Vorhandensein eines nicht verbundenen Straßenbelags, wobei jede Achse ihre Trommel optimal anpasst.

5. Kombinierte Kugelstrahlmaschine nach Anspruch 3 oder 4, **dadurch gekennzeichnet, dass** die auf den Trommeln oder Fräswalzen montierten Werkzeuge Kastenwerkzeuge sind.

6. Kombinierte Kugelstrahlmaschine nach Anspruch 3 oder 4, **dadurch gekennzeichnet, dass** die auf den Trommeln oder Fräswalzen montierten Werkzeuge Hackwerkzeuge sind.

7. Kombinierte Kugelstrahlmaschine nach Anspruch 3 oder 4, **dadurch gekennzeichnet, dass** die auf den Trommeln oder Fräswalzen montierten Werkzeuge Diamantwerkzeuge sind.

8. Kombinierte Kugelstrahlmaschine nach einem der Ansprüche 1 bis 7, **dadurch gekennzeichnet, dass** die Rotationsachsen der Trommeln der rotierenden Fräswalzen der Vertikutierungseinheit (C-C) mit Sensoren zur Überwachung ihrer Position und der Arbeitsweise versehen sind Daten für ihr Feedback zur Einstellung und Steuerung.

9. Kombiniertes Kugelstrahlenmaschine nach einem der Ansprüche 1 bis 8, **dadurch gekennzeichnet, dass** die Vertikutierungseinheit (C-C) einen Aufbau mit Rahmen und Haube, in dem die Walzen der Fräswalzen untergebracht sind, Trennwände zur Trennung und Ableitung des Schmutzes zwischen den verschiedenen Walzen und eine Aufnahme umfasst und Abfuhrkanäle für die Reststoffe am Kasten der Einheit (B-B), eine Kontrollstation für die Bewegungen von Rollen und Platten, Kanäle für Kabel, Kameras für die 3D-Anzeige und Messmittel, Glühbirnen, Wandler und Sensoren, die an Bord installiert sind Sammeln und Übertragen aller erfassten Signale und der von der SPS erfassten Parameter.

10. Kombinierte Kugelstrahlmaschine nach einem der Ansprüche 1 bis 9, **dadurch gekennzeichnet, dass** bei der Vertikutiermaschine die Achsträger der hintereinander angeordneten, vertikal schwenkbaren, seitlich verschiebbaren und umlaufenden Trommeln keine einzige Walze umfassen entlang ihrer Länge aber eine oder mehrere nebeneinander angeordnete Scheiben, die Seite an Seite auf verschiedenen Längen der Achse montiert sind und sich parallel zu den anderen Scheiben, die auf den verschiedenen Rotationsachsen montiert sind, koppeln und einfügen.

11. Kombinierte Kugelstrahlmaschine nach Anspruch 10, **dadurch gekennzeichnet, dass** bei der Vertikutiermaschine die Trommel eine zentrale Welle und zwei Scheiben an den Enden sowie eine Abfolge von Spindeln am Umfang aufweist, wobei diese letzteren achteckige Unterlegscheiben variabler Dicke eingelegt haben von 5 bis 10 mm, wobei das zentrale Loch der Unterlegscheiben etwa das Doppelte des Durchmessers der Spindel beträgt, was den Einsatz auch auf nicht zusammenhängenden Oberflächen ermöglicht.

12. Kombinierte Kugelstrahlmaschine nach einem der Ansprüche 1 bis 11, **dadurch gekennzeichnet, dass** sie eine integrierte Systemsoftware zur Überwachung, Überwachung und Steuerung umfasst, die von einem Dienstprogramm wie SPS, Tablet, Smartphone oder Server-Router-WLAN verwaltet wird. Fi, in der Lage, die folgenden Funktionen auszuführen:
- Sammeln aller von an Bord installierten Lampen, Wandler und Sensoren empfangenen Signale, automatische Verwaltung der Aktivierung und Deaktivierung aller Servicebefehle, Weiterleitung der diktierten Befehle an den Kabinen- oder Bodenbetreiber über die Funksteuerung und autonom, Vergleich der angeforderten in Echtzeit Befehle mit den programmierten Befehlen und deren Ausführung im Falle einer falschen Bewegung, außerdem um deren Ausführung zu verhindern, indem ein akustisches Signal gefolgt von einer Textnachricht an den Bediener in der Kabine gesendet wird und die Arbeitsgeschwindigkeit entsprechend dem Ergebnis eingestellt wird erhalten durch die Behandlung, seitliches Bewegen und Anheben oder Absenken der Werkbänke je nach Bedarf;
- vordere und hintere 3D-Anzeige- und Messmittel, die mit dem besagten Dienstprogramm gekoppelt sind, um die Unterstützung beim Fahren des Lastkraftwagens zu ermöglichen, dafür zu sorgen, dass die Vertikutierungsmaschine und die Kugelstrahlmaschine ordnungsgemäß funktionieren, sowie den gesamten Arbeitsprozess einzustellen, zu steuern und aufzuzeichnen.
- eine in diesem Dienstprogramm enthaltene Diagnoseroutine/-anwendung mit lokaler und entfernter Abfrage, die Fernerfassung und -aktionen ermöglicht und es dem Dienstprogramm ermöglicht, den Zustand der Maschine direkt zu ändern, die Software zu aktualisieren und den laufenden Prozess zu optimieren Dieser Vorgang kann aus der Ferne unterstützt werden, wenn der Bediener eine Rücksprache mit der Leitstelle wünscht.

13. Automatisierter Prozess unter Verwendung der Maschine nach einem der Ansprüche 1 bis 11, verwaltet durch die Softwareanwendungen nach Anspruch 12, **dadurch gekennzeichnet, dass** er Folgendes umfasst:
a. Implementierung der computergestützten Steuerung der Maschine zur Steuerung aller mechanischen, pneumatischen, elektrischen und elektronischen Komponenten;
b. die Umsetzung der Ferndiagnose mit einer äußerst vereinfachten und ergonomischen Benutzeroberfläche;
c. Die Reduzierung auf einen einzigen Bediener, der mit der Steuerung des gesamten Prozesses beauftragt ist, auch mit der Möglichkeit einer vollständigen Fernsteuerung mit oder ohne Bediener, wobei die zu behandelnde Oberfläche in einem einzigen Durchgang zwei Behandlungen unterzogen wird - integriertes Fräsen und Kugelstrahlen - Anpassung Passt sich dem Straßenprofil an und gewährleistet, dass nur der hervorstehende Teil der Straßenmarkierungen entfernt wird, wodurch die Oberfläche sofort regeneriert wird, was den kritischen Faktor der Arbeitszeit deutlich reduziert und die Möglichkeit von Fehlern bei der Anwendung der Behandlung ausschließt.

14. Automatisierter Prozess nach Anspruch 13, geeignet und kompatibel für eine Fernverwaltung und -bedienung des gesamten Arbeitsprozesses, in Abwesenheit und ohne die Notwendigkeit eines lokalen Bedieners auf vollautomatische und autonome Weise.

15. Verwendung der Kugelstrahlmaschine nach einem der Ansprüche 1 bis 12 zur Entfernung der Fahrbahnmarkierungen und zur Reinigung und Regenerierung der Makro-/Mikrorauheit von Straßen- und Autobahnbelägen, einschließlich Beschichtungen aus modifiziertem Bitumen (polymere Basen).

16. Verwendung der Kugelstrahlmaschine nach einem der Ansprüche 1 bis 12, zur Reinigung und Entharzung von Start- und Landebahnen sowie zur Entfernung der Fahrbahnmarkierungen der Flugplätze.

## Revendications

1. Grenailleuse combinée automotrice à hautes performances, pour le traitement de surfaces de revêtement en conglomérat bitumineux, asphalte, béton ou métal comprenant une unité de grenaillage (A), une unité d'aspiration, de filtrage, de séparation et de stockage (B), accouplées,
- l'unité de grenaillage (A) constituée de moyens d'alimentation (2, 2') en air extérieur frais, de moyens projetant les microsphères (1, 1'), d'une succession de conduits pour le transit desdites microsphères avec les impuretés collectées et les matières résiduelles du processus de travail et de des moyens de séparation, de collecte et de recyclage (5, 8, 9),
- l'unité d'aspiration et de filtrage (B) composée d'un aspirateur ou d'un ventilateur, d'un conteneur de séparation et de collecte du matériel du cycle de travail, des poussières, de la charge et autres, d'un générateur d'énergie auxiliaire (11) pour la distribution autonome du mouvement à la machine à travers un transmission hydrostatique et pour la génération de puissance hydraulique et électrique nécessaire à toutes les unités et utilités asservies à la machine,
dont :
- la grenaillage combinée automotrice à hautes performances comprend :
- une unité de scarification
- l'unité de grenaillage est munie d'un autre tamis intercooler pour le refroidissement des microsphères et leur décontamination finale des résidus bitumineux qui y adhèrent ;
- une unité de scarification à rouleaux disposée sur la partie avant du véhicule automoteur, pour éliminer préalablement les marquages routiers avant le processus de grenaillage ultérieur ;
- une unité automotrice mécano-magnétique collectant les matériaux métalliques, principalement sur les revêtements routiers et les pistes, composée d'un véhicule automoteur autonome, remorque ou semi-remorque, muni de :
- des brosses dans la partie avant pour libérer et déplacer les grains attachés et enchevêtrés aux résidus de bitume modifié qui sont trempés pendant le traitement de grenaillage ;
- des moyens d'aspiration et de filtrage à sec pour éviter de produire des poudres lors du brossage ;
- un groupe magnétique arrière entièrement automatisé pour la capture continue des matériaux ferreux, avec rotation réglable et garde au sol automatiquement contrôlée en fonction des paramètres pour contrôler l'enlèvement desdits matériaux ;
- un bassin de collecte des sables perdus et récupérés ;
- des conduits d'aspiration et de transport des rebuts, des débris et des produits résiduels contaminants du sable vers un conteneur de décharge ;
- des moyens de lavage et de stockage.

2. Grenailleuse combinée selon la revendication 1, **caractérisée en ce que** l'unité de scarification (C-C) est entièrement disposée sur le véhicule sur sa partie avant et à laquelle est reliée au moyen de deux plateaux couplés entre eux, un premier plateau frontal placé sur le châssis avant dudit véhicule automoteur, un second plateau apte à translater sur toute la longueur dudit premier plateau sur lequel est ancré un plateau pivotant et réglable en hauteur solidaire de l'extrémité arrière de ladite unité de scarification, permettant le scarification unité à translater sur toute la longueur du véhicule automoteur, à se mettre en hauteur contre lui et à se lever et se retourner par une rotation de 90°, pour un transport facile de la cour au garage ou à l'atelier et vice versa.

3. Grenailleuse combinée selon la revendication 1 ou 2, **caractérisée en ce que** l'unité de scarification (C-C) comprend au moins six tambours à rouleaux de fraisage autonettoyants, montés sur des axes indépendants, disposés en séquence, tournant en sens inverse contre le sens du mouvement, adaptable au plan de travail, déplaçable transversalement, en hauteur et en pente, muni d'outils de typologies différentes selon les besoins des marquages routiers à enlever, le grenaillage effectué dans la même passe, permettant de laisser la surface propre sans perturber les utilités et libre de recevoir une éventuelle peinture complémentaire.

4. Grenailleuse combinée selon l'une quelconque des revendications 1 à 3, **caractérisée en ce que** les rouleaux de fraisage des tambours de l'unité de scarification (C-C) ont une disposition différente des outils, de sorte que l'enlèvement des marquages routiers peut être gérée au mieux et plus rapidement en évitant le contact avec le revêtement routier, en présence d'un revêtement routier déconnecté, chaque axe adaptant au mieux son tambour.

5. Grenailleuse combinée selon la revendication 3 ou 4, **caractérisée en ce que** les outils montés sur les tambours ou cylindres de fraisage sont des outils à caisson.

6. Grenailleuse combinée selon la revendication 3 ou 4, **caractérisée en ce que** les outils montés sur les tambours ou rouleaux de fraisage sont des outils de houe.

7. Grenailleuse combinée selon la revendication 3 ou 4, **caractérisée en ce que** les outils montés sur les tambours ou cylindres de fraisage sont des outils diamantés.

8. Grenailleuse combinée selon l'une quelconque des revendications 1 à 7, **caractérisée en ce que** les axes de rotation des tambours des rouleaux de fraisage rotatifs de l'unité de scarification (C-C) sont munis de capteurs pour surveiller leur position et la marche données pour leur retour d'information sur le réglage et le contrôle.

9. Grenaillage combiné machine selon l'une quelconque des revendications 1 à 8, **caractérisée en ce que** l'unité de scarification (C-C) comprend une carrosserie avec châssis et capot qui abrite les rouleaux des tambours de fraisage, des cloisons de séparation pour séparer et évacuer les débris entre les différents rouleaux, et des conduits d'évacuation desdites matières résiduelles au niveau du caisson de l'unité (B-B), un poste de contrôle des mouvements des rouleaux et des plaques, des conduits pour les câbles, des caméras pour l'affichage 3D et des moyens de mesure, des ampoules, des transducteurs et des capteurs installés à bord pour collecter et transmettre tous les signaux capturés et les paramètres collectés par l'automate.

10. Grenailleuse combinée selon l'une quelconque des revendications 1 à 9, **caractérisée en ce que** dans la machine de scarification les bases d'essieux parmi les tambours disposés en séquence, basculant verticalement, déplaçables latéralement et tournants, ne comprennent pas de rouleau unique sur leur longueur mais un ou plusieurs disques côte à côte montés côte à côte sur différentes longueurs de l'axe, s'accouplant et s'insérant parallèlement aux autres disques montés sur les différents axes de rotation.

11. Grenailleuse combinée selon la revendication 10, **caractérisée en ce que** dans la machine de scarification le tambour présente un arbre central et deux disques aux extrémités, une succession de broches sur la circonférence, ces dernières ayant inséré des rondelles octogonales d'épaisseur variable de 5 à 10 mm, le trou central des rondelles étant environ le double du diamètre de l'axe permettant d'opérer également sur des surfaces déconnectées.

12. Grenailleuse combinée selon l'une quelconque des revendications 1 à 11, **caractérisée en ce qu'**elle comprend un logiciel système intégré de relevé, de surveillance et de contrôle géré par un utilitaire, de type CPL, Tablette, Smartphone ou Serveur-Routeur Wi- Fi, capable d'effectuer les fonctions suivantes :
- collecter tous les signaux reçus des ampoules, transducteurs et capteurs installés à bord, gérer automatiquement l'activation et la désactivation de toutes les commandes de service, transmettre les commandes dictées à l'opérateur de cabine ou au sol, via la radiocommande et de manière autonome, comparer en temps réel le demandé commandes avec celles programmées et en les exécutant, en cas de mouvement incorrect, en plus d'empêcher de le mettre en oeuvre, en prévoyant d'envoyer un signal acoustique suivi d'un message texte à l'opérateur dans la cabine, en réglant la vitesse de travail en fonction du résultat obtenu par le traitement, se déplaçant latéralement et soulevant ou abaissant les bancs de travail selon les besoins ;
- des moyens de visualisation et de mesure 3D avant et arrière couplés audit utilitaire pour permettre l'assistance à la conduite du camion, faire fonctionner correctement la scarificateur et la grenailleuse, paramétrer, contrôler et enregistrer l'ensemble du processus de travail.
- une routine/application de diagnostic incluse dans ledit utilitaire, avec interrogation locale et à distance, permettant la détection et les actions à distance, permettant à l'utilitaire de modifier directement l'état de la machine ainsi que de mettre à jour le logiciel, ainsi que d'optimiser le processus en cours, ledit processus étant assisté à distance si l'opérateur souhaite conférer avec le centre de contrôle.

13. Procédé automatisé utilisant la machine selon l'une quelconque des revendications 1 à 11, géré par les applications logicielles selon la revendication 12, **caractérisé en ce qu'**il comprend,
a. mise en place de la gestion informatisée de la machine pour contrôler tous les composants mécaniques, pneumatiques, électriques et électroniques ;
b. la mise en place du diagnostic à distance avec une interface utilisateur extrêmement simplifiée et ergonomique ;
c. la réduction à un seul opérateur chargé de contrôler l'ensemble du processus, également avec la possibilité d'une gestion entièrement à distance avec ou sans opérateur, soumettant la surface à traiter à deux traitements - fraisage intégré et grenaillage - en un seul passage, en adaptant au profil de la route et en garantissant de supprimer uniquement la partie saillante des marquages routiers, en régénérant ensuite immédiatement ladite surface en réduisant sensiblement le facteur critique du temps de travail, en éliminant la possibilité d'erreur dans l'application du traitement.

14. Procédé automatisé selon la revendication 13, adapté et compatible avec une gestion et une exploitation à distance de l'ensemble du processus de travail, en l'absence et sans la nécessité d'un opérateur local de manière entièrement automatisée et autonome.

15. Utilisation de la machine de grenaillage selon l'une quelconque des revendications 1 à 12, pour l'effacement des marquages routiers et le nettoyage et la régénération de la macro/micro rugosité des revêtements routiers et autoroutiers, y compris les revêtements en bitume modifié (bases polymères).

16. Utilisation de la machine de grenaillage selon l'une quelconque des revendications 1 à 12, pour le nettoyage et le détartrage des pistes et le décapage des marquages routiers des aérodromes.
